(19) **Europäisches Patentamt** / **European Patent Office** / **Office européen des brevets**

(11) **EP 4 177 792 A1**

(12) **EUROPEAN PATENT APPLICATION**
published in accordance with Art. 153(4) EPC

(43) Date of publication:
**10.05.2023 Bulletin 2023/19**

(21) Application number: **21851426.3**

(22) Date of filing: **05.07.2021**

(51) International Patent Classification (IPC):
**G06N 3/04** (2023.01)        **G06N 3/08** (2023.01)
**G06N 20/00** (2019.01)      **G06F 8/65** (2018.01)

(52) Cooperative Patent Classification (CPC):
**G06F 8/65; G06N 3/04; G06N 3/08; G06N 20/00**

(86) International application number:
**PCT/CN2021/104537**

(87) International publication number:
**WO 2022/022233 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2020 CN 202010732241**

(71) Applicant: **Huawei Cloud Computing
Technologies Co., Ltd.
Guizhou 550025 (CN)**

(72) Inventors:
• **WU, Shuzhe**
  **Shenzhen, Guangdong 518129 (CN)**
• **JIN, Xin**
  **Shenzhen, Guangdong 518129 (CN)**
• **LI, Xincheng**
  **Shenzhen, Guangdong 518129 (CN)**
• **TU, Dandan**
  **Shenzhen, Guangdong 518129 (CN)**

(74) Representative: **Grünecker Patent- und
Rechtsanwälte
PartG mbB
Leopoldstraße 4
80802 München (DE)**

(54) **AI MODEL UPDATING METHOD AND APPARATUS, COMPUTING DEVICE AND STORAGE MEDIUM**

(57) This application provides a method, an apparatus, and a computing device for updating an AI model, and a storage medium, and belongs to the field of artificial intelligence technologies. The method includes: obtaining an inference data set, where inference data in the inference data set is used to be input into an existing AI model for performing inference; determining that there is a difference between data distribution of the inference data set and data distribution of a training data set, where the training data set is a data set used for training the existing AI model; and updating the existing AI model by using the inference data set to obtain an updated AI model. According to this application, the existing AI model can be updated in a timely manner when it is perceived that there is a difference between data distribution of the inference data set and data distribution of the training data set, instead of updating the existing AI model only when a user finds that precision of the AI model is reduced. Therefore, the AI model can be updated in a timely manner.

EP 4 177 792 A1

An AI platform obtains an inference data set — 701

The AI platform determines that there is a difference between data distribution of the inference data set and data distribution of a training data set — 702

The AI platform updates an existing AI model by using the inference data set to obtain an updated AI model — 703

FIG. 7

## Description

This application claims priority to Chinese Patent Application No. 202010732241.0, filed with the China National Intellectual Property Administration on July 27, 2020 and entitled "METHOD, APPARATUS, AND COMPUTING DEVICE FOR UPDATING AI MODEL, AND STORAGE MEDIUM", which is incorporated herein by reference in its entirety.

## TECHNICAL FIELD

This application relates to the field of artificial intelligence (Artificial Intelligence, AI) technologies, and in particular, to a method, an apparatus, and a computing device for updating an AI model, and a storage medium.

## BACKGROUND

With the development of artificial intelligence technologies, AI models are increasingly widely used. Currently, for the AI model, a parameter of the AI model is mainly learned based on a large amount of data by using an algorithm such as machine learning. The AI model is obtained by learning a large amount of data. Therefore, although the constructed AI model has a specific generalization capability, when there is a large difference between data distribution in a scenario in which the AI model is used and distribution of training data of the AI model, performance of the AI model is affected, and precision is reduced. A larger distribution difference indicates more significant reduction of the precision. However, an actual application environment of the AI model changes dynamically. Therefore, in an actual application scenario, data distribution may change constantly. Consequently, the AI model cannot maintain stable precision in a changing application scenario. To enable precision of the AI model to adapt to a change of the scenario, the AI model needs to be updated adaptively.

In a related technology, an AI platform is developed, and a user updates the model by using the AI platform. Specifically, the AI platform provides functions required from AI model training to AI model deployment. These functions generally include data labeling, data management, model training, model inference, and the like. The user may train the AI model by using the AI platform. Subsequently, when determining that a current AI model is not suitable for a current scenario, the user may provide a data set of the current scenario to update the AI model, so that an updated AI model is suitable for the current scenario. Then, the user applies the updated AI model to the current scenario.

According to a method for updating an AI model in the related technology, the AI model can be updated only after precision of the AI model is reduced and the user perceives that the precision of the AI model in the current scenario is reduced. Consequently, the AI model is not updated in a timely manner.

## SUMMARY

This application provides a method, an apparatus, and a computing device for updating an AI model, and a storage medium, to update the AI model in a timely manner.

According to a first aspect, this application provides a method for updating an AI model, where the method includes: obtaining an inference data set, where inference data in the inference data set is used to be input into an existing AI model for performing inference; determining that there is a difference between data distribution of the inference data set and data distribution of a training data set, where the training data set is a data set used for training the existing AI model; and updating the existing AI model by using the inference data set to obtain an updated AI model.

In the solution in this application, the method for updating an AI model may be performed by an AI platform. In the foregoing method, the existing AI model is updated when there is a difference between data distribution of the inference data set and data distribution of the training data set, instead of updating the existing AI model only when a user perceives that precision of the AI model is reduced. Therefore, the AI model can be updated in a timelier manner.

In a possible implementation, the existing AI model is deployed on an inference platform, and the method further includes: comparing inference precision of the updated AI model with inference precision of the existing AI model, and determining that the inference precision of the updated AI model is better than the inference precision of the existing AI model; and deploying the updated AI model on the inference platform to perform inference in place of the existing AI model.

In the solution in this application, the existing AI model may be deployed on the inference platform, and the inference platform may be a part of the AI platform, or may be independent of the AI platform. The AI platform may obtain the inference precision of the updated AI model and the inference precision of the existing AI model, and then compares the inference precision of the updated AI model with the inference precision of the existing AI model. When the inference precision of the updated AI model is better than the inference precision of the existing AI model, the AI platform deploys the updated AI model on the inference platform, to perform inference in the inference platform by using the updated AI model in place of the existing AI model. In this way, the existing AI model is updated only when the inference precision of the updated AI model is better than the inference precision of the existing AI model. Therefore, the inference precision is high when the updated AI model is used to perform inference.

In a possible implementation, before the deploying the updated AI model on the inference platform, the method further includes: displaying the inference precision of the existing AI model and the inference precision of the updated AI model by using a display interface, and receiving an update instruction of a user for the existing AI model.

In the solution in this application, before deploying the updated AI model on the inference platform, the AI platform may display the inference precision of the existing AI model and the inference precision of the updated AI model by using the display interface, and the user may choose whether to update the existing AI model. When receiving the update instruction of the user for the existing AI model, the AI platform may deploy the updated AI model on the inference platform. In this way, the user may determine whether to deploy the updated AI model, so that user experience can be better.

In a possible implementation, the updating the existing AI model by using the inference data set includes: if the difference meets an offline update condition, updating the existing AI model offline by using the inference data set; or if the difference does not meet an offline update condition, updating the existing AI model online by using the inference data set.

In the solution in this application, the AI platform may determine whether the difference between data distribution of the inference data set and data distribution of the training data set meets the offline update condition. When the difference meets the offline update condition, the AI platform may update the existing AI model offline by using the inference data set. When the difference does not meet the offline update condition, the AI platform may update the existing AI model online by using the inference data set. In this way, different update manners may be selected based on different differences, so that update duration can be reduced.

In a possible implementation, the updating the existing AI model online by using the inference data set includes: determining a parameter change amount of a target part in the existing AI model by using the difference between data distribution of the inference data set and data distribution of the training data set; and determining a parameter of a target part in the updated AI model based on a current parameter and the parameter change amount of the target part in the existing AI model. In this way, during online update, only parameters of some parts in the AI model may be updated, so that the existing AI model can be updated online.

In a possible implementation, the updating the existing AI model by using the inference data set includes: constructing a target data set based on the inference data set; and updating the existing AI model by using the target data set.

In a possible implementation, the constructing a target data set based on the inference data set includes: obtaining, from the inference data set, target data that meets a sample condition, and displaying the target data by using the display interface; obtaining a result of labeling the target data by the user; and constructing the target data set based on the target data and the labeling result of the target data.

In the solution in this application, the AI platform may select, from the inference data set, the target data that meets the sample condition, and display the target data to the user, so that the user labels the target data. The AI platform may construct the target data set based on the result of labeling the target data by the user and the target data. In this way, when the existing AI model is updated, the constructed target data set includes the target data that meets the sample condition and that is labeled by the user, so that the updated AI model can be more suitable for performing inference on the inference data set.

In a possible implementation, the obtaining, from the inference data set, target data that meets a sample condition includes: obtaining, from the inference data set based on the difference between data distribution of the inference data set and data distribution of the training data set, the target data that meets the sample condition, where the target data is suitable for updating the existing AI model. In this way, based on the difference between data distribution of the inference data set and data distribution of the training data set, the target data can be more suitable for updating the existing AI model.

In a possible implementation, the target data set further includes labeled data that is sampled and/or generated in current labeled data and that is suitable for data distribution of the inference data set, and the current labeled data includes data in the training data set. In this way, labeled data suitable for data distribution of the inference data set may be obtained from existing labeled data. Therefore, the target data set may have a large amount of labeled data, so that the inference precision of the updated AI model can be higher.

In a possible implementation, the target data set includes unlabeled data and labeled data that are suitable for data distribution of the inference data set; and the updating the existing AI model by using the target data set includes: optimizing a feature extraction part in the existing AI model in an unsupervised manner by using the unlabeled data in the target data set; and updating the existing AI model based on the optimized feature extraction part and the labeled data in the target data set. In this way, the feature extraction part in the AI model may be optimized before the existing AI model is updated.

In a possible implementation, the target data set includes unlabeled data and labeled data that are suitable for data distribution of the inference data set; and the updating the existing AI model by using the target data set includes:

labeling the unlabeled data in the target data set by using the existing AI model, to obtain a labeling result of the unlabeled data; and updating the existing AI model based on the labeling result of the unlabeled data and the labeled data in the target data set. In this way, because the unlabeled data in the target data set may be labeled, the target data set may have a large amount of labeled data, so that the inference precision of the updated AI model can be higher.

In a possible implementation, the updating the existing AI model by using the target data set includes: obtaining, based on a data characteristic of data in the target data set, a policy for updating the existing AI model; and updating the existing AI model based on the policy. In this way, the data characteristic of the data in the target data set may be used to select the policy for updating the existing AI model, to update the existing AI model. Therefore, efficiency of updating the existing AI model can be improved, and the inference precision of the updated AI model can be higher.

In a possible implementation, the method further includes: obtaining an AI model update period input by the user; and the determining that there is a difference between data distribution of the inference data set and data distribution of a training data set includes: determining, based on the AI model update period, that there is a difference between data distribution of the inference data set and data distribution of the training data set. In this way, the user may determine the AI model update period, and when the update period reaches, an AI model update procedure is executed.

According to a second aspect, this application provides an apparatus for updating an artificial intelligence AI model, where the apparatus includes: an obtaining module, configured to obtain an inference data set, where inference data in the inference data set is used to be input into an existing AI model for performing inference; a determining module, configured to determine that there is a difference between data distribution of the inference data set and data distribution of a training data set, where the training data set is a data set used for training the existing AI model; and an update module, configured to update the existing AI model by using the inference data set to obtain an updated AI model. In this way, the existing AI model is updated when there is a difference between data distribution of the inference data set and data distribution of the training data set, instead of updating the existing AI model only when a user perceives that precision of the AI model is reduced. Therefore, the AI model can be updated in a timely manner.

In a possible implementation, the existing AI model is deployed on an inference platform, and the determining module is further configured to: compare inference precision of the updated AI model with inference precision of the existing AI model, and determine that the inference precision of the updated AI model is better than the inference precision of the existing AI model; and the update module is further configured to deploy the updated AI model on the inference platform, so that the updated AI model performs inference in place of the existing AI model. In this way, the existing AI model is updated only when the inference precision of the updated AI model is better than the inference precision of the existing AI model, so that the inference precision is high.

In a possible implementation, the apparatus further includes a display module, configured to: before the updated AI model is deployed on the inference platform, display the inference precision of the existing AI model and the inference precision of the updated AI model by using a display interface; and the apparatus further includes a receiving module, configured to receive an update instruction of a user for the existing AI model. In this way, the user may determine whether to deploy the updated AI model, so that user experience can be better.

In a possible implementation, the update module is configured to: if the difference meets an offline update condition, update the existing AI model offline by using the inference data set; or if the difference does not meet an offline update condition, update the existing AI model online by using the inference data set. In this way, different update manners may be selected based on different differences, so that update duration can be reduced.

In a possible implementation, the update module is configured to: determine a parameter change amount of a target part in the existing AI model by using the difference between data distribution of the inference data set and data distribution of the training data set; and determine a parameter of a target part in the updated AI model based on a current parameter and the parameter change amount of the target part in the existing AI model. In this way, during online update, only parameters of some parts in the AI model may be updated, so that the existing AI model can be updated online.

In a possible implementation, the update module is configured to: construct a target data set based on the inference data set; and update the existing AI model by using the target data set.

In a possible implementation, the update module is configured to: obtain, from the inference data set, target data that meets a sample condition, and display the target data by using the display interface; obtain a result of labeling the target data by the user; and construct the target data set based on the target data and the labeling result of the target data. In this way, when the existing AI model is updated, the constructed target data set includes the target data that meets the sample condition and that is labeled by the user, so that the updated AI model can be more suitable for performing inference on the inference data set.

In a possible implementation, the update module is configured to obtain, from the inference data set based on the difference between data distribution of the inference data set and data distribution of the training data set, the target data that meets the sample condition, where the target data is suitable for updating the existing AI model. In this way, the target data that meets the sample condition can be more accurately obtained through screening.

In a possible implementation, the target data set further includes labeled data that is sampled and/or generated in current labeled data and that is suitable for data distribution of the inference data set, and the current labeled data includes data in the training data set.

In a possible implementation, the target data set includes unlabeled data and labeled data that are suitable for data distribution of the inference data set; and the update module is configured to: optimize a feature extraction part in the existing AI model in an unsupervised manner by using the unlabeled data in the target data set; and update the existing AI model based on the optimized feature extraction part and the labeled data in the target data set. In this way, the feature extraction part in the AI model may be optimized before the existing AI model is updated.

In a possible implementation, the target data set includes unlabeled data and labeled data that are suitable for data distribution of the inference data set; and the update module is configured to: label the unlabeled data in the target data set by using the existing AI model, to obtain a labeling result of the unlabeled data; and update the existing AI model based on the labeling result of the unlabeled data and the labeled data in the target data set. In this way, because the unlabeled data in the target data set may be labeled, the target data set may have a large amount of labeled data, so that the inference precision of the updated AI model can be higher.

In a possible implementation, the update module is configured to: obtain, based on a data characteristic of data in the target data set, a policy for updating the existing AI model; and update the existing AI model based on the policy. In this way, the data characteristic of the data in the target data set may be used to select the policy for updating the existing AI model, to update the existing AI model. Therefore, efficiency of updating the existing AI model can be improved, and the inference precision of the updated AI model can be higher.

In a possible implementation, the obtaining module is further configured to obtain an AI model update period input by the user; and

the determining module is configured to determine, based on the AI model update period, that there is a difference between data distribution of the inference data set and data distribution of the training data set.

According to a third aspect, a computing device for updating an AI model is provided, where the computing device includes a processor and a memory, the memory stores computer instructions, and the processor executes the computer instructions to implement the method in the first aspect and the possible implementations of the first aspect.

According to a fourth aspect, a computer-readable storage medium is provided, where the computer-readable storage medium stores computer instructions. When the computer instructions in the computer-readable storage medium are executed by a computing device, the computing device is enabled to perform the method in the first aspect and the possible implementations of the first aspect, or the computing device is enabled to implement a function of the apparatus in the second aspect and the possible implementations of the second aspect.

According to a fifth aspect, a computer program product including instructions is provided. When the computer program product runs on a computing device, the computing device is enabled to perform the method in the first aspect and the possible implementations of the first aspect, or the computing device is enabled to implement a function of the apparatus in the second aspect and the possible implementations of the second aspect.

## BRIEF DESCRIPTION OF DRAWINGS

FIG. 1 is a schematic diagram of a structure of an AI platform 100 according to an embodiment of this application;

FIG. 2 is a schematic diagram of an application scenario of an AI platform 100 according to an embodiment of this application;

FIG. 3 is a schematic diagram of deploying an AI platform 100 according to an embodiment of this application;

FIG. 4 is a schematic diagram of a structure of a computing device 400 on which an AI platform 100 is deployed according to an embodiment of this application;

FIG. 5 is a schematic diagram of an operation mode according to an embodiment of this application;

FIG. 6 is a logical diagram of updating an AI model according to an embodiment of this application;

FIG. 7 is a schematic flowchart of a method for updating an AI model according to an embodiment of this application;

FIG. 8 is a schematic diagram of updating an AI model without user participation according to an embodiment of this application;

FIG. 9 is a schematic diagram of updating an AI model with user participation according to an embodiment of this application;

FIG. 10 is a schematic flowchart of a method for updating an AI model according to an embodiment of this application;

FIG. 11 is a schematic diagram of an AI model update scenario according to an embodiment of this application;

FIG. 12 is another schematic diagram of determining a data distribution difference according to an embodiment of this application;

FIG. 13 is a schematic diagram of updating a local parameter of an AI model according to an embodiment of this application;

FIG. 14 is a schematic diagram of determining target data according to an embodiment of this application;

FIG. 15 is a schematic diagram of a structure of an apparatus for updating an AI model according to an embodiment of this application;

FIG. 16 is a schematic diagram of a structure of an apparatus for updating an AI model according to an embodiment of this application; and

FIG. 17 is a schematic diagram of a structure of a computing device according to an embodiment of this application.

## DESCRIPTION OF EMBODIMENTS

To make the objectives, technical solutions, and advantages of this application clearer, the following further describes the implementations of this application in detail with reference to the accompanying drawings.

Currently, artificial intelligence is constantly booming. Machine learning is a core means to implement AI. Machine learning permeates various industries such as medicine, transportation, education, and finance. Both a technical professional person and non-AI technical professional persons in various industries are expecting to complete specified tasks through AI and machine learning.

To facilitate understanding of technical solutions and embodiments that are provided in this application, the following describes in detail concepts such as an AI model, AI model training, and an AI platform.

The AI model is a mathematical algorithm model that resolves a practical problem by using a machine learning idea. The AI model includes a large quantity of parameters and a large quantity of calculation formulas (or calculation rules). The parameter in the AI model is a value that may be obtained by training the AI model by using a training data set. For example, the parameter in the AI model is the calculation formula or a weight of a calculation factor in the AI model. The AI model further includes some hyperparameter (hyper-parameter). The hyperparameter can be used to instruct AI model construction or AI model training. There are a plurality of types of hyperparameters, for example, an iteration (iteration) quantity, a learning rate (leaning rate), a batch size (batch size), a layer quantity of the AI model, and a neuron quantity of each layer in AI model training. The hyperparameter may be a parameter obtained by training the AI model by using the training data set, or may be a preset parameter. The preset parameter is not updated by training the AI model by using the training data set.

There are various AI models. A widely used AI model is a neural network model. The neural network model is a mathematical algorithm model that mimics a structure and a function of a biological neural network (a central nervous system of an animal). One neural network model may include a plurality of neural network layers with different functions, and each layer includes a parameter and a calculation formula. Different layers in the neural network model have different names based on different calculation formulas or different functions. For example, a layer for performing convolution calculation is referred to as a convolutional layer, and the convolutional layer is usually used to perform feature extraction on an input signal (such as an image). Alternatively, one neural network model may be formed by combining a plurality of existing neural network models. Neural network models with different structures may be used in different scenarios (for example, classification and identification), or provide different effects when the models are used in a same scenario. That neural network models have different structures specifically include one or more of the following items: Layer quantities of network layers in the neural network models are different, sequences of the network layers are different, and weights, parameters, or calculation formulas at the network layers are different. In the industry, there are already a plurality of different neural network models that are used in an application scenario such as identification or classification and that have high accuracy. Some neural network models may be trained by using a specified training data set, and then used to complete a task independently or together with another neural network model (or another functional module). Each AI model usually needs to be trained before being used to complete a task.

AI model training means using an existing sample (namely, a training data set) and a specified method to enable an AI model to fit a rule in the existing sample, to determine a parameter in the AI model. For example, when an AI model used for image classification or detection identification is trained, a training image set needs to be prepared. Based on whether a training image in the training image set has a label (that is, whether the image has a specified type or name), AI model training may be divided into supervised training (supervised training) and unsupervised training (unsupervised training). When supervised training is performed on the AI model, the training image that is in the training image set and that is used for training has a label (label). During AI model training, the training image in the training image set is used as an input of the AI model, the label corresponding to the training image is used as reference of an output value of the AI model, a loss (loss) value between the output value of the AI model and the label corresponding to the training image is calculated by using a loss function (loss function), and a parameter in the AI model is adjusted based on the loss value. The AI model is iteratively trained by using each training image in the training image set, and the parameter in the AI model is continuously adjusted until the AI model can output, with high accuracy based on an input training image, a same output value as the label corresponding to the training image. When unsupervised training is performed on the AI model, the training image that is in the image set and that is used for training has no label, and training images in the training image set are successively input into the AI model, so that the AI model gradually identifies association and a potential rule between the training images in the training image set until the AI model can be used to determine or identify a type or a feature of an input image. For example, for clustering, after receiving a large quantity of training images, an AI model used for clustering may learn a feature of each training image and association and a difference between the training images, and automatically classify the training images into a plurality of types. Different AI models may be used for different task types. Some AI models may be trained only through supervised learning. Some AI models may be trained only through unsupervised learning. Some other AI models may be trained through both supervised learning and unsupervised learning. The AI model on which training is completed may be used to complete a specified task. Generally, all AI models in machine learning need to be trained through supervised learning. When the AI model is trained through supervised learning, the AI model can learn, in a more targeted manner from a training image set with a label, association between a training image in the training image set and a corresponding label, so that the AI model on which training is completed has high accuracy when the model is used to predict another input inference image.

The following describes an example in which a neural network model used for a data classification task is trained through supervised learning. To train a neural network model used to complete a data classification task, first, data is collected based on the task, and a training data set is constructed. The constructed training data set includes three types of data: an apple, a pear, and a banana. The collected training data is separately stored in three folders based on a type, and a name of a folder is a label of all data in the folder. After the training data set is constructed, a neural network model (such as a convolutional neural network (convolutional neural network, CNN)) that can implement data classification is selected, the training data in the training data set is input into the CNN, and a convolution kernel of each layer in the CNN is used to perform feature extraction and feature classification on the data. Finally, a confidence (confidence) existing when the data belongs to each type is output, a loss value is calculated based on the confidence and a label corresponding to the data and by using a loss function, and a parameter of each layer in the CNN is updated based on the loss value and a CNN structure. The training process is continuously executed until a loss value output by the loss function converges or all data in the training data set is used for training. In this case, training ends.

A loss function is a function used to measure a degree at which an AI model is trained (that is, used to calculate a difference between a result predicted by the AI model and a real target). In an AI model training process, because an output of the AI model is expected to be as close as possible to a value that is actually expected to predict, a value currently predicted by the AI model based on input data may be compared with a target value (namely, a label of the input data) that is actually desired, and then a parameter in the AI model is updated based on a difference between the two values (certainly, there is usually an initialization process before the first time of update, that is, an initial value is preconfigured for the parameter in the AI model). In each time of training, the difference between the value currently predicted by the AI model and the real target value is determined by using the loss function, to update the parameter in the AI model until the AI model can predict a target value that is actually desired or a value that is very close to the target value that is actually desired. In this case, it is considered that training of the AI model is completed.

After training of the AI model is completed, the AI model on which training is completed may be used to perform inference on data to obtain an inference result. For example, in an image classification scenario, a specific inference process is as follows: An image is input into an AI model, a convolution kernel of each layer in the AI model is used to perform feature extraction on the image, and a category to which the image belongs is output based on an extracted feature. In an object detection (which may also be referred to as object detection) scenario, an image is input into an AI model, a convolution kernel of each layer in the AI model is used to perform feature extraction on the image, and a location and a category of a bounding box of each object included in the image are output based on an extracted feature. In a scenario that covers image classification and object detection, an image is input into an AI model, and a convolution kernel of each layer in the AI model is used to perform feature extraction on the image, a category to which the image belongs and a location and a category of a bounding box of each object included in the image are output based on an extracted feature. It should be noted herein that for the AI model, some AI models have a strong inference capability, and some AI models have a weak inference capability. That the AI model has a strong inference capability means that when the AI model is used to perform inference on an image, accuracy of an inference result is greater than or equal to a value. That the AI model has a weak inference capability means that when the AI model is used to perform inference on an image, accuracy of an inference result is less than the value.

Data labeling is a process of adding all labels in a corresponding scenario to each piece of unlabeled data. For example, the unlabeled data is an unlabeled image. In an image classification scenario, a category to which the unlabeled image belongs is added to the unlabeled image. In an object detection scenario, location information and a category are added to an object in the unlabeled image. Certainly, data labeling may be a process of adding a part of labels in a corresponding scenario to one or more pieces of unlabeled data. For example, in an object detection scenario, only a category is added to an object in an unlabeled image, and location information of the object in the unlabeled image is not added.

The AI platform is a platform that provides a convenient AI development environment and a convenient development tool for an AI developer and a user. Various AI models or AI sub-models for resolving different problems are built into the AI platform. The AI platform may establish a suitable AI model based on a requirement input by the user.

To be specific, the user only needs to determine a requirement of the user in the AI platform, prepare a training data set based on a prompt, and upload the training data set to the AI platform, so that the AI platform can train, for the user, an AI model that can be used to implement the requirement of the user. For example, if the user requires an image classification model, the AI platform may select a classification model from stored AI models, and then update the classification model by using a training data set to obtain the AI model required by the user. Alternatively, the user prepares an algorithm and a training data set of the user based on a prompt, and uploads the algorithm and the training data set to the AI platform. The AI platform may train, based on the algorithm and the training data set of the user, an AI model that can be used to implement a requirement of the user. The user may complete a specified task of the user by using the AI model on which training is completed.

It should be noted that the AI model mentioned above is a general term, and the AI model includes a deep learning model, a machine learning model, and the like.

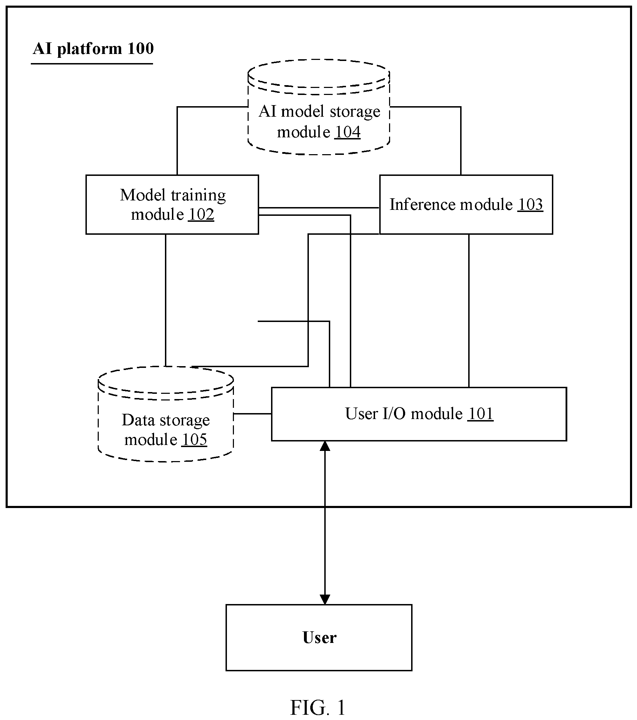

FIG. 1 is a schematic diagram of a structure of an AI platform 100 according to an embodiment of this application. It should be understood that FIG. 1 merely shows an example of a schematic diagram of a structure of the AI platform 100, and division of modules in the AI platform 100 is not limited in this application. As shown in FIG. 1, the AI platform 100 includes a user input/output (input/output, I/O) module 101, a model training module 102, and an inference module 103. Optionally, the AI platform may further include an AI model storage module 104 and a data storage module 105.

The following briefly describes a function of each module in the AI platform 100.

The user I/O module 101 is configured to receive an inference data set input by a user, or is configured to: establish, by a user, a connection between the AI platform and a device that generates inference data, and obtain an inference data set from the device that generates the inference data. For example, the device that generates the inference data is a camera or the like. The user I/O module 101 is further configured to: receive a task target input or selected by the user, receive a training data set of the user, and the like. The user I/O module 101 is further configured to receive a result of labeling target data (the target data is a sample suitable for data distribution of the inference data set) in the inference data set by the user, obtain one or more pieces of data with a label from the user, and the like. Certainly, the user I/O module 101 is further configured to provide an AI model for another user and the like. For example, the user I/O module 101 may be implemented by using a graphical user interface (graphical user interface, GUI) or a command-line interface (CLI). For example, the GUI displays a plurality of AI services (such as an image classification service and an object detection service) that may be provided by the AI platform 100 for the user. The user may select a task target in the GUI. For example, the user selects the image classification service, and the user may continue to upload a plurality of unlabeled images to the GUI of the AI platform and the like. After receiving the task target and the plurality of unlabeled images, the GUI communicates with the model training module 102. The model training module 102 selects or searches for, for the user based on the task target determined by the user, an initial AI model that can be used to complete the task target of the user.

Optionally, the user I/O module 101 may be further configured to receive an effect expectation that is input by the user and that is for the AI model used to complete the task target. For example, an effect expectation that accuracy existing when a finally obtained AI model is used for facial recognition is greater than 99% is input or selected.

Optionally, the user I/O module 101 may be further configured to receive an AI model input by the user and the like. For example, the user may input the initial AI model in the GUI based on the task target of the user. The user I/O module 101 may be further configured to provide various pre-built-in initial AI models for selection by the user. For example, the user may select an initial AI model in the GUI based on the task target of the user.

Optionally, when the AI model is applied to an image classification scenario and an object detection scenario, the user I/O module 101 may be further configured to receive a low-level feature and a high-level feature of an unlabeled image in the inference data set input by the user. In the image classification scenario, the low-level feature includes one or more of resolution of an image, an aspect ratio of an image, a mean and variance of red green blue (RGB) of an image, brightness of an image, saturation of an image, or clarity of an image. The high-level feature is an abstract feature that is of an image and that is extracted by using a convolution kernel in a feature extraction model (such as a CNN). In the object detection scenario, the low-level feature includes a low-level feature of a bounding box and a low-level feature of an image. The low-level feature of the bounding box may include one or more of an aspect ratio of each bounding box in a single frame of image, a ratio of an area of each bounding box in a single frame of image to an area of the image, a marginalization degree of each bounding box in a single frame of image, an overlapping ratio of each bounding box in a single frame of image, brightness of each bounding box in a single frame of image, or a blur degree of each bounding box in a single frame of image. The low-level feature of the image may include one or more of resolution of the image, an aspect ratio of the image, a mean and variance of RGB of the image, brightness of the image, saturation of the image, clarity of the image, a quantity of boxes in a single frame of image, or variance of areas of boxes in a single frame of image. The high-level feature is an abstract feature that is of an image and that is extracted by using a convolution kernel in a feature extraction model (such as a CNN).

Optionally, the user I/O module 101 may be further configured to provide a GUI, so that the user labels training data in the training data set, and the user labels the target data in the inference data set.

Optionally, the user I/O module 101 may be further configured to receive various configuration information of the user for the initial AI model and the training data in the training data set.

Optionally, the user I/O module 101 may be further configured to provide a GUI, so that the model training module 102 provides inference precision of an AI model existing before update, inference precision of an updated AI model, and the like, and the user inputs an AI model update instruction.

Optionally, the user I/O module 101 may be further configured to provide a GUI, so that the user inputs an AI model update period.

The model training module 102 is configured to train the AI model. Herein, "training" may be understood as training the initial AI model and optimizing and updating the AI model on which training is completed. The initial AI model includes an AI model that is not trained. The AI model on which training is completed is an AI model obtained by training the initial AI model, or an AI model obtained by updating an existing AI model on which training is completed.

The model training module 102 may communicate with the user I/O module 101, the inference module 103, and the AI model storage module 104. Specifically, the model training module 102 may obtain, from the user I/O module 101, data labeled by the user. The model training module 102 may obtain an existing AI model from the AI model storage module 104 as the initial AI model and the like. The model training module 102 may obtain an inference result of the inference data set and the inference data set from the inference module 103, and train the AI model based on the inference result and the inference data set.

Optionally, the model training module 102 is further configured to perform a preprocessing operation on the training data in the training data set received by the user I/O module 101. For example, after a training image in a training image set uploaded by the user is preprocessed, sizes of training images in the training image set may be consistent, and an improper training image in the training image set may be further removed. The preprocessed training data set may be suitable for training the initial AI model, and may be further used to obtain a better training effect. The preprocessed training image set may be further stored in the data storage module 105.

Optionally, the model training module 102 may be further configured to: determine, as the initial AI model, an AI model selected by the user in the GUI, determine, as the initial AI model, an AI model uploaded by the user by using the GUI.

Optionally, the model training module 102 may be further configured to evaluate the trained AI model to obtain an evaluation result. Certainly, an independent module may evaluate the AI model.

The inference module 103 performs inference on the inference data set by using the AI model, and outputs the inference result of the inference data set and the target data. The inference module 103 may communicate with the user I/O module 101 and the AI model storage module 104. The inference module 103 obtains the inference data set from the user I/O module 101, and performs inference processing on the inference data set to obtain the inference result of the inference data set. The inference module 103 feeds back the labeling result of the inference data set and the target data to the user I/O module 101. The user I/O module 101 obtains the target data labeled by the user and label confirmation of the user on the inference result, and feeds back, to the model training module 102, the target data labeled by the user and inference data on which the user performs label confirmation. The model training module 102 continues to train an optimized AI model based on the target data and the inference data, on which the user performs label confirmation, that are provided by the user I/O module 101, to obtain a more optimized AI model. The model training module 102 transmits the more optimized AI model to the AI model storage module 104 for storage, and transmits the more optimized AI model to the inference module 103 for inference processing.

Optionally, when the inference module 103 performs inference on the inference data set, an output may further include a difference between data distribution of the inference data set and data distribution of the training data set of the AI model. In this case, the inference module 103 provides the difference for the model training module 102, and the model training module 102 may determine an AI model update manner based on the difference. Certainly, the difference between data distribution of the inference data set and data distribution of the training data set of the AI model may not be determined by the inference module 103, but is determined by an independent module on the AI platform. In addition, the difference between data distribution of the inference data set and data distribution of the training data set of the AI model may be determined by the model training module 102.

Optionally, the inference module 103 is further configured to perform a preprocessing operation on inference data in the inference data set received by the user I/O module 101. For example, after an inference image in an inference image set uploaded by the user is preprocessed, sizes of inference images in the inference image set may be consistent, and an improper inference image in the inference image set may be further removed. The preprocessed inference data set may be suitable for performing inference by the initial AI model, and may be further used to obtain a better inference effect. The preprocessed inference image set may be further stored in the data storage module 105.

The data preprocessing operation may be performed by an independent module that is separately connected to the inference module 103 and the model training module 102, to provide a preprocessed inference data set for the inference module 103, and provide a preprocessed training image set for the model training module 102.

Optionally, in an AI model update process, if there is no user participation, the inference module 103 may not provide the inference result of the inference data set and the target data for the user I/O module 101.

Optionally, the initial AI model may further include an AI model obtained after an AI model in the AI model storage module 104 is trained by using data in the training data set.

The AI model storage module 104 is configured to store the initial AI model, the updated AI model, an AI sub-model structure, a preset model, and the like. The preset model is an AI model that has been trained on the AI platform and that can be directly used, or an AI model that has been trained on the AI platform but needs to continue to be trained and updated. The AI model storage module 104 may communicate with the user I/O module 101 and the model training module 102. The AI model storage module 104 receives and stores the initial AI model and the updated AI model that are transmitted by the model training module 102 and on which training is completed. The AI model storage module 104 provides the AI sub-model or the initial AI model for the model training module 102. The AI model storage module 104 stores the initial AI model that is uploaded by the user and that is received by the user I/O module 101. It should be understood that, in another embodiment, the AI model storage module 104 may be used as a part of the model training module 102.

The data storage module 105 (for example, may be a data storage resource corresponding to an object storage service (Object Storage Service, OBS) provided by a cloud service provider) is configured to store the training data set and the inference data set that are uploaded by the user, is also configured to store data processed by a data preprocessing module 105, and is further configured to store sampled or generated data suitable for data distribution of the inference data set.

Optionally, in the foregoing descriptions, the user I/O module obtains the inference data set. Certainly, the data storage module 105 may be directly connected to a data source to obtain the inference data set. For example, the data storage module 105 is connected to a camera, and a video image photographed by the camera constitutes the inference data set.

Optionally, the data storage module 105 may further store a knowledge base, and the knowledge base includes knowledge that helps update the AI model more quickly.

It should be noted that the AI platform in this application may be a system that may interact with the user. The system may be a software system, a hardware system, or a system that combines software and hardware. This is not limited in this application.

It should be further noted that the model training module 102 is configured to perform initial training on the AI model, and is further configured to update the AI model. Certainly, in this embodiment of this application, a module configured to perform initial training and a module configured to update the AI model may be separately deployed.

Due to the functions of the foregoing modules, the AI platform provided in this embodiment of this application may determine that there is a difference between data distribution of the inference data set and data distribution of the training data set, and perform update processing on the AI model when there is a difference, so that the AI model can be updated in a timely manner.

It should be noted that, the foregoing AI platform may not include the inference module 103, and the AI platform is only configured to provide update processing for the AI model. Specifically, the user provides the inference data set, the AI model, and the training data set (or may be data distribution of the training data set for training the AI model) for training the AI model for the AI platform, and the AI platform updates the AI model. The AI platform provides the updated AI model for the user. Alternatively, the AI platform is connected to a third-party platform (namely, an inference platform that performs inference on inference data), the AI platform obtains the inference data set, the AI model, and the training data set (or may be data distribution of the training data set for training the AI model) for training the AI model from the third-party platform, and the AI platform updates the AI model. The AI platform provides the updated AI model for the third-party platform.

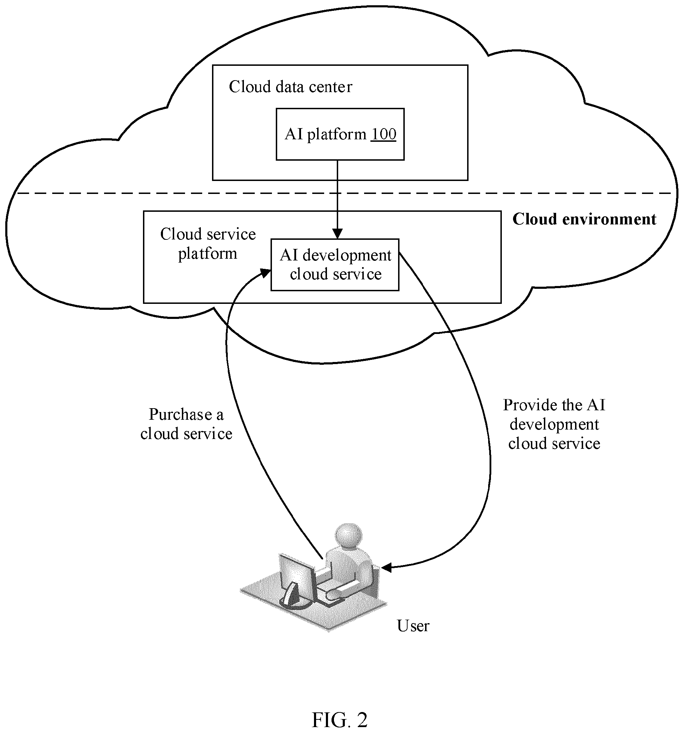

FIG. 2 is a schematic diagram of an application scenario of an AI platform 100 according to an embodiment of this application. As shown in FIG. 2, in an embodiment, the AI platform 100 may be all deployed in a cloud environment. The cloud environment is an entity that provides a cloud service for a user in a cloud computing mode by using a basic resource. The cloud environment includes a cloud data center and a cloud service platform. The cloud data center includes a large quantity of basic resources (including a computing resource, a storage resource, and a network resource) owned by a cloud service provider. The computing resource included in the cloud data center may be a large quantity of computing devices (for example, a server). The AI platform 100 may be independently deployed on a server or a virtual machine in the cloud data center, or the AI platform 100 may be deployed on a plurality of servers in the cloud data center in a distributed manner, or deployed on a plurality of virtual machines in the cloud data center in a distributed manner, or deployed on a server and a virtual machine in the cloud data center in a distributed manner. As shown in FIG. 2, the AI platform 100 is abstracted by the cloud service provider on the cloud service platform into an AI cloud service, and is provided for a user. After the user purchases the cloud service on the cloud service platform (which can be pre-recharged and then settled based on a final resource use status), the cloud environment provides an AI platform cloud service for the user by using the AI platform 100 deployed in the cloud data center. When using the AI platform cloud service, the user may determine, by using an application programming interface (application program interface, API) or a GUI, a task to be completed by an AI model, and upload a training image set and an inference data set to the cloud environment. The AI platform 100 in the cloud environment receives the task information, the training data set, and the inference data set of the user, and performs operations such as data preprocessing, AI model training, and performing inference on the inference data set by using an AI model on which training is completed. The AI platform returns content such as an inference result of the inference data set, target data determined in the inference data set, inference precision of an AI model existing before update, and inference precision of an updated AI model to the user by using the API or the GUI. The user further selects whether to deploy the updated AI model. The AI model on which training is completed may be downloaded or used online by the user to complete a specified task.

In another embodiment of this application, when the AI platform 100 in the cloud environment is abstracted into an AI cloud service and is provided for a user, the service may be divided into two parts: a basic AI cloud service and a cloud service for updating an AI model based on data distribution. The basic AI cloud service may be a service for training an AI model. The user may purchase only the basic AI cloud service on the cloud service platform. When the user needs to use the cloud service for updating an AI model, the user purchases the service. After purchase, the cloud service provider provides an API of the cloud service for updating an AI model, and finally performs, based on a quantity of times of invoking the API, additional charging on the cloud service for updating an AI model. Certainly, the user may purchase only the cloud service for updating an AI model.

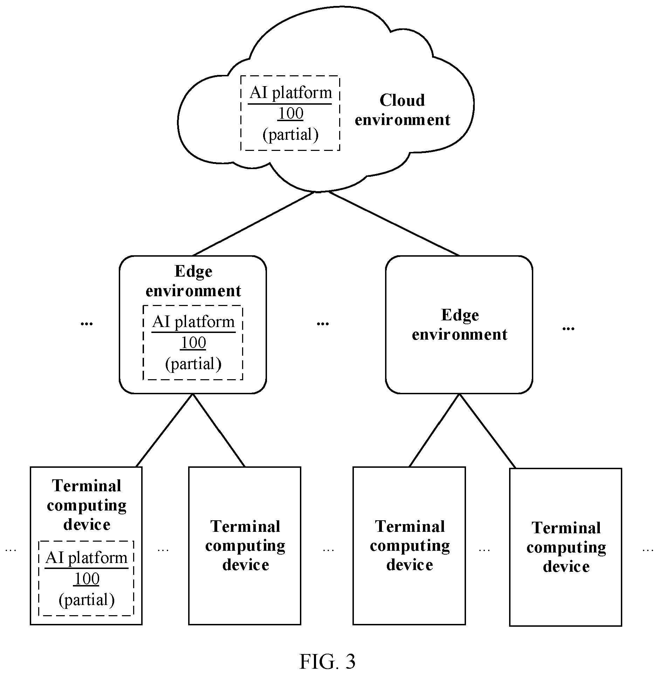

Deployment of the AI platform 100 provided in this application is flexible. As shown in FIG. 3, in another embodiment, the AI platform 100 provided in this application may be deployed in different environments in a distributed manner. The AI platform 100 provided in this application may be logically divided into a plurality of parts, and the parts have different functions. For example, in an embodiment, the AI platform 100 includes a user I/O module 101, a model training module 102, an AI model storage module 104, and a data storage module 105. The parts of the AI platform 100 may be separately deployed in any two or three environments in a terminal computing device, an edge environment, and a cloud environment. The terminal computing device includes a terminal server, a smartphone, a notebook computer, a tablet computer, a personal desktop computer, an intelligent camera, and the like. The edge environment is an environment that includes a set of edge computing devices close to the terminal computing device, and the edge computing device includes an edge server, an edge small cell that has a computing capability, and the like. Various parts that are of the AI platform 100 and that are deployed in different environments or devices cooperatively provide, for a user, functions such as determining and training a constructed AI model. For example, in a scenario, the user I/O module 101 and the data storage module 105 in the AI platform 100 are deployed in the terminal computing device, and the model training module 102, the inference module 103, and the AI model storage module 104 in the AI platform 100 are deployed in the edge computing device in the edge environment. The user sends a training data set and an inference data set to the user I/O module 101 in the terminal computing device, and the terminal computing device stores the training data set and the inference data set to the data storage module 105. The model training module 102 in the edge computing device updates an AI model based on the inference data set. It should be understood that, in this application, a specific environment in which a specific part of the AI platform 100 is deployed is not limited. In actual application, adaptive deployment may be performed based on a computing capability of the terminal computing device, resource occupation statuses of the edge environment and the cloud environment, or a specific application requirement. The foregoing is described by using an example in which the user needs to input the training data set. Certainly, the user may not input the training data set, and the user may directly input distribution of the training data set, or the model training module 102 analyzes a current existing AI model, and determines distribution of the training data set.

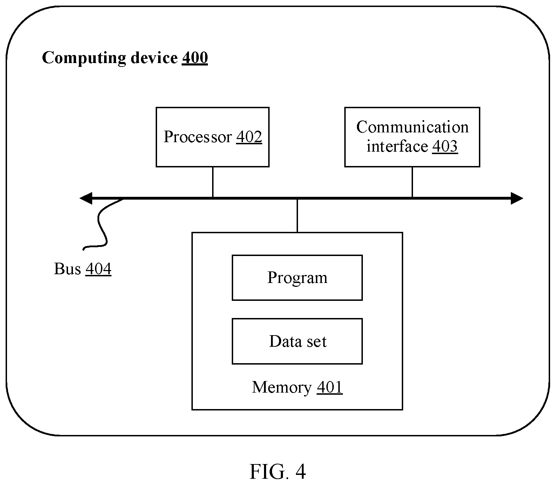

The AI platform 100 may be independently deployed on a computing device in any environment (for example, independently deployed on an edge server in the edge environment). FIG. 4 is a schematic diagram of a hardware structure of a computing device 400 on which an AI platform 100 is deployed. The computing device 400 shown in FIG. 4 includes a memory 401, a processor 402, a communication interface 403, and a bus 404. The memory 401, the processor 402, and the communication interface 403 are communicatively connected to each other by using the bus 404.

The memory 401 may be a read-only memory (Read Only Memory, ROM), a random access memory (Random Access Memory, RAM), a hard disk, a flash memory, or any combination thereof. The memory 401 may store a program. When the program stored in the memory 401 is executed by the processor 402, the processor 402 and the communication interface 403 are configured to perform a method in which an AI platform 100 trains an AI model for a user, determines that there is a difference between data distribution of an inference data set and data distribution of a training data set, and updates the AI model based on the inference data set. The memory may further store a data set. For example, a part of storage resources in the memory 401 are grouped into a data storage module 105, configured to store data required by the AI platform 100, and a part of storage resources in the memory 401 are grouped into an AI model storage module 104, configured to store an AI model library.

The processor 402 may use a central processing unit (CPU), an application-specific integrated circuit (ASIC), a graphics processing unit (GPU), or any combination thereof. The processor 402 may include one or more chips. The processor 402 may include an AI accelerator such as a neural-network processing unit (neural processing unit, NPU).

The communication interface 403 uses a transceiver module such as a transceiver, to implement communication between the computing device 400 and another device or a communication network. For example, data may be obtained by using the communication interface 403.

The bus 404 may include a path for transferring information between components (for example, the memory 401, the processor 402, and the communication interface 403) of the computing device 400.

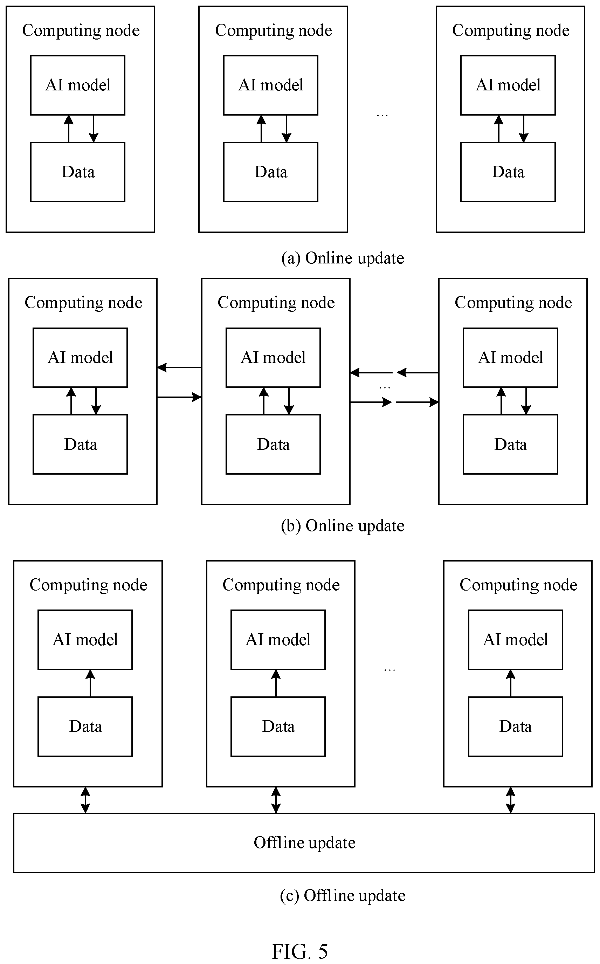

In the embodiments of this application, in a method for updating an AI model, when an existing AI model is updated, there may be a plurality of operation modes such as an online single-node self-update, an online multi-node cooperative update, and an offline multi-node cooperative update. Online single-node self-update means that computing nodes on which an AI model is deployed are independent of each other, and update the AI model online only by using data accessed by the node. Online multi-node cooperative update means that data communication is added between different computing nodes, to allow the computing nodes to exchange accessed data between each other. In this case, when updating a model online, one computing node may use data accessed by the computing node, and may also use data shared by another computing node. Offline multi-node cooperative update means that AI model update may be simultaneously performed offline. In this mode, data accessed by computing nodes may be aggregated for use together when an AI model is updated offline. After the AI model is updated offline, an updated AI model is pushed to each computing node. The three operation manners respectively correspond to (a) in FIG. 5, (b) in FIG. 5, and (c) in FIG. 5 shown in FIG. 5.

Specifically, when the existing AI model is updated, a proper operation mode may be selected based on an actual case (a detailed process is described below). For example, when a change of data distribution of an inference data set and a change of data distribution of a training data set are not large, online single node self-update is used. When a change of data distribution of an inference data set and a change of data distribution of a training data set are large, offline multi-node cooperative update is used.

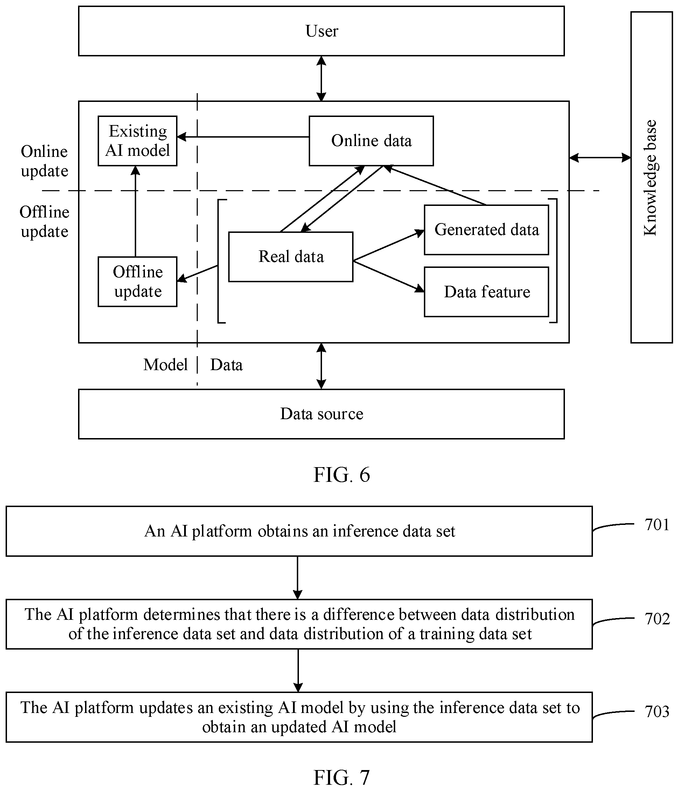

In the embodiments of this application, a logical diagram of updating an AI model shown in FIG. 6 is further provided.

FIG. 6 includes a data source, offline update, online update, a knowledge base, and the like. The data source includes data of a scenario to which a method for updating an AI model is applied. The knowledge base includes priori knowledge and/or domain knowledge of model training. The priori knowledge and/or the domain knowledge may provide a basis for selecting a model update policy, and may also provide a policy for instructing model update in an AI model update process. For example, when a user requires an AI model for detecting a cat, an AI platform learns, from the domain knowledge, that both the cat and a tiger belong to the feline family and are similar. Currently, the AI platform already has an AI model for detecting a tiger. The AI platform may obtain the AI model for detecting a tiger, and then updates, by using an image of the cat, the AI model for detecting a tiger, to obtain the AI model for detecting a cat. For another example, when a user has a requirement on one or more of an inference speed, memory occupation, and a hardware device of an AI model, an AI platform may select, based on the user requirement and the knowledge base, an AI model architecture or a preset model that meets the user requirement.

Online update means adaptively updating an AI model online. Offline update means updating an AI model offline. During offline update, used data may include real data (such as data in an inference data set), and labeled data (briefly referred to as generated data in FIG. 6) that is sampled or generated and that is suitable for the inference data set. Certainly, the used data may include a data characteristic, and the data characteristic is information such as statistics and distribution of various types of data. In a box in a lower left corner of FIG. 6, "offline update" is an offline update process, including: obtaining data for updating an AI model, and updating an existing AI model based on the data. It should be noted herein that, during offline update, a parameter in the existing AI model may be adjusted, or a new AI model may be retrained as an updated AI model. When a new AI model is retrained, the offline update process further includes: processing an initial model obtained from the AI model storage module 104. Data (which may be briefly referred to as online data) used during online update may include data obtained from real data, labeled data that is sampled or generated and that is suitable for an inference data set, and the like.

With reference to FIG. 7, the following describes a specific procedure of the method for updating an AI model. An example in which the method is performed by an AI platform is used for description.

Step 701. The AI platform obtains an inference data set.

Inference data in the inference data set is used to be input into an existing AI model for performing inference, and the existing AI model may also be referred to as an AI model existing before update.

In this embodiment, a user may input the inference data set into the AI platform, or the AI platform obtains the inference data set from a connected inference data source, or the like. For example, the AI platform is connected to a camera, and the AI platform may continuously obtain data from the camera as data in the inference data set, and the camera is an inference data source. The data in the inference data set is unlabeled data.

Step 702. The AI platform determines that there is a difference between data distribution of the inference data set and data distribution of a training data set.

The training data set is a data set used for training the existing AI model.

In this embodiment, each time the inference data set is obtained, the AI platform may determine data distribution of the inference data set, and obtain data distribution of the training data set. Alternatively, each time an AI model update period reaches, the AI platform may determine data distribution of the inference data set, and obtain data distribution of the training data set. The AI model update period may be set by the user.

The AI platform determines whether there is a difference between data distribution of the inference data set and data distribution of the training data set. If there is a difference between data distribution of the inference data set and data distribution of the training data set, the AI platform performs step 703. Otherwise, subsequent processing is not performed. A reason is as follows: If there is a difference between data distribution of the inference data set and data distribution of the training data set, there is a large probability that the existing AI model may not be suitable for the inference data set, and update processing is performed on the existing AI model to adapt to the inference data set. When there is no difference between data distribution of the inference data set and data distribution of the training data set, it indicates that the existing AI model is still suitable for the inference data set, and update processing may not be performed on the existing AI model, to save processing resources.

Herein, a process of obtaining data distribution of the training data set may be as follows: The AI platform may obtain the training data set, and determine data distribution of the training data set based on the training data set, or the AI platform may obtain data distribution of the training data set from the user, or the AI platform may obtain data distribution of the training data set through analysis based on an inference result of the inference data set by the existing AI model.

Step 703. The AI platform updates the existing AI model by using the inference data set to obtain an updated AI model.

In this embodiment, when determining that there is a difference between data distribution of the inference data set and data distribution of the training data set, the AI platform may update the existing AI model based on the inference data set to obtain the updated AI model.

In this way, because a change of data distribution may be perceived, the existing AI model may be updated in a timely manner based on the change of data distribution.

In a possible implementation, the existing AI model is deployed on an inference platform (the inference platform may be a part of the AI platform, for example, the inference platform includes the inference module and the like mentioned above, or may be a platform independent of the AI platform). After step 703, the AI platform may compare inference precision of the updated AI model with inference precision of the existing AI model, determine that the inference precision of the updated AI model is better than the inference precision of the existing AI model, and deploy the updated AI model on the inference platform, so that the updated AI model performs inference in place of the existing AI model.

In this embodiment, the AI platform may separately evaluate the updated AI model by using a test data set suitable for data distribution of the training data set and a test data set suitable for data distribution of the inference data set, to obtain a first evaluation result and a second evaluation result, and separately evaluate the existing AI model by using the test data set suitable for data distribution of the inference data set and the test data set suitable for data distribution of the training data set, to obtain a third evaluation result and a fourth evaluation result. If the first evaluation result is not significantly lower than the fourth evaluation result, and the second evaluation result is better than the third evaluation result, the AI platform determines that the inference precision of the updated AI model is better than the inference precision of the existing AI model. The AI platform may provide the updated AI model for the inference platform (may specifically provide all content of the updated AI model, or may provide content of the updated AI model different from that of the existing AI model). The inference platform may perform inference processing by using the updated AI model in place of the existing AI model.

It should be noted that, when the existing AI model and the updated AI model are evaluated, one or more of a precision recall (Precision Recall, PR) curve, an average precision (Average Precision, AP) indicator, a false positive rate, and a false negative rate may be used. Certainly, when different types of AI models are evaluated, different evaluation indicators may be used. For example, in an object detection scenario, in addition to the PR curve, the AP indicator, and the like, intersection over union distribution of a bounding box and an average value of AP in case of different intersection over union may be used. Herein, the PR curve is used as an example. Certainly, various diagrams such as a boxplot and a confusion matrix may be used, and the PR curve imposes no limitation.

In the foregoing descriptions, the AI model is evaluated by using the inference precision. Certainly, an inference speed may be used, that is, the AI platform uses a comprehensive result of the inference precision and the inference speed as a basis for evaluating the AI model.

In a possible implementation, the user may determine whether to deploy the updated AI model. When determining that the inference precision of the updated AI model is better than the inference precision of the existing AI model, the AI platform may display the inference precision of the existing AI model and the inference precision of the updated AI model by using a display interface. The user may determine, based on the inference precision of the two models, whether to deploy the updated AI model. When determining to deploy the updated AI model, the user may trigger AI model update, and the AI platform receives an update instruction of the user for the existing AI model. The AI platform may provide the updated AI model for the inference platform.

Herein, when displaying the inference precision, the AI platform may further display, in the display interface, other information that helps display a model characteristic of the updated AI model or information specified by the user, for example, one or more of a gradient change trend, a decline trend of a loss function used for training, a precision change trend of a validation set, an intermediate output result, or intermediate feature visualization.

In a possible implementation, in step 703, different update manners may be used based on different differences.

If the difference meets an offline update condition, the AI platform updates the existing AI model offline by using the inference data set. If the difference does not meet an offline update condition, the AI platform updates the existing AI model online by using the inference data set.

The offline update condition is preset. For example, in this embodiment of this application, for an image, the offline update condition is that a difference between a reconstruction error of the image and a reconstruction error of a training image set is greater than a first value, and a difference between prediction errors of a predicted image and an original image that correspond to a feature of the image is greater than a second value. For another example, in this embodiment of this application, when anomaly detection is performed on a switch, the data in the inference data set is a packet loss rate, and the offline update condition is that a difference between a maximum packet loss rate in the inference data set and a maximum packet loss rate in the training data set is greater than a third value.

In this embodiment, the AI platform may determine whether the difference between data distribution of the inference data set and data distribution of the training data set meets the offline difference condition. If the difference meets the offline difference condition, it indicates that the difference between data distribution of the inference data set and data distribution of the training data set is large, the existing AI model is not suitable for performing inference on the inference data set, online update is slow, and online update is not suitable. The AI platform updates the existing AI model offline by using the inference data set.

If the difference does not meet the offline difference condition, it indicates that the difference between data distribution of the inference data set and data distribution of the training data set is not very large, and although the existing AI model is not suitable for performing inference on the inference data set, online update can be performed. The AI platform updates the existing AI model online by using the inference data set.

In this way, an update manner may be flexibly selected based on the difference between data distribution of the inference data set and data distribution of the training data set.

In a possible implementation, during online update, a parameter in the updated AI model may be determined based on the difference between data distribution of the inference data set and data distribution of the training data set. Details are as follows:

The AI platform determines a parameter change amount of a target part in the existing AI model by using the difference between data distribution of the inference data set and data distribution of the training data set, and determines a parameter of a target part in the updated AI model based on a current parameter and the parameter change amount of the target part in the existing AI model.

The target part is one sub-model in the existing AI model, or is all sub-models in the existing AI model.

In this embodiment, the AI platform may obtain a relationship between a change of data distribution and a parameter change amount. The relationship may be obtained through pre-modeling by the AI platform, or may be obtained from another platform. The AI platform may obtain the relationship between a change of data distribution and a parameter change amount, and determine the parameter change amount of the target part by using the difference between data distribution of the inference data set and data distribution of the training data set and the relationship between a change of data distribution and a parameter change amount. Then, the AI platform determines the parameter of the target part in the updated AI model by using the current parameter and the parameter change amount of the target part in the existing AI model. The AI platform replaces the existing AI model with the parameter of the target part, to obtain the updated AI model. In this way, some or all parameters of the AI model may be updated online.

In a possible implementation, when the existing AI model is updated, update processing may be performed on the existing AI model based on a data set (which may be subsequently referred to as a target data set), and processing is as follows:

The AI platform constructs a target data set based on the inference data set, and updates the existing AI model by using the target data set.

In this embodiment, the existing AI model may construct a target data set by using the inference data set, for example, sample some data in the inference data set as data in the target data set. Then, the AI platform performs update processing on the existing AI model by using the target data set to obtain the updated AI model.

In a possible implementation, when the existing AI model is updated by using the target data set, the user may participate in constructing the target data set, or may not participate in the target data set. When the user participates in constructing the target data set, the user may confirm an inference result of inference data, or label target data provided by the AI platform. In this case, the target data set includes labeled data, and the AI platform may update the existing AI model by using a supervised learning technology and the like. In addition, if necessary, the AI platform may update the existing AI model by using an unsupervised learning technology. Moreover, the AI platform may perform fine tuning and adaptation on the existing AI model by using a transfer learning technology and a domain adaptation technology.

When the user does not participate in constructing the target data set, the AI platform may update the existing AI model by using an unsupervised learning technology, or update the existing AI model by using a semi-supervised learning technology.

Specific processing is as follows: 1. The target data set may be constructed based on user participation. The AI platform obtains, from the inference data set, target data that meets a sample condition, and displays the target data by using the display interface; obtains a result of labeling the target data by the user; and constructs the target data set based on the target data and the labeling result of the target data.

The sample condition is used to indicate typical data in the inference data set.

In this embodiment, the AI platform may determine, from the inference data set, the target data that meets the sample condition. Then, the AI platform displays the target data by using the display interface. Specifically, the target data may be data that is not labeled in the inference data set, or may be data with a label after inference is performed on the inference data set. When the target data is data that is not labeled in the inference data set, the user may label the target data in the display interface, and the AI platform obtains the result of labeling the target data by the user. When the target data is data with a label after inference is performed on the inference data set, the user may confirm an existing label of the target data in the display interface, and the AI platform may also obtain the result of labeling the target data by the user. The AI platform may use the target data and the labeling result of the target data as a part of labeled data in the target data set.

2. When there is user participation, the AI platform may display the inference result of the inference data set by using the display interface. The user performs label confirmation on the inference result. The AI platform can obtain, as labeled data in the target data set, the inference result on which label confirmation is performed. In addition, when the user performs label confirmation on the inference result, if a new category is found, a label of the new category may be added to the result on which label confirmation is performed, and the label of the new category is also used as labeled data in the target data set.

3. When there is no user participation, the target data set may further include data that is sampled and/or generated by the AI platform in current labeled data and that is suitable for data distribution of the inference data set. The current labeled data may include data in the training data set, and may further include labeled data in another existing scenario. "Sampling" herein means finding, in the current labeled data, data suitable for data distribution of the inference data set. "Generating" herein means generating data suitable for data distribution of the inference data set based on the current labeled data and a data generation algorithm. In this way, when there is a small amount of existing data suitable for data distribution for the inference data set, a large amount of data suitable for data distribution of the inference data set may also be provided, to help update the AI model.

It should be noted that, when there is user participation, the user may participate in labeling data in real time, and the AI platform may perform training in real time by using the labeled data labeled by the user.

In a possible implementation, that update processing is performed on the existing AI model by using the target data set may be as follows:

The AI platform obtains, based on a data characteristic of data in the target data set, a policy for updating the existing AI model, and updates the existing AI model based on the policy.

In this embodiment, the AI platform may select, by using the data characteristic of the data in the target data set and prior knowledge and/or domain knowledge in a knowledge base, the policy for updating the existing AI model. Then, the AI platform updates the existing AI model by using the policy to obtain the updated AI model.

For example, if there is a small amount of labeled data in the target data set, based on the prior knowledge in the knowledge base, it is learned that a transfer learning technology and/or a few-shot learning technology are/is used when there is a small amount of labeled data. The AI platform may update the existing AI model by using the transfer learning technology and/or the few-shot learning technology.

If there is a large amount of labeled data in the target data set, based on the prior knowledge in the knowledge base, it is learned that a strongly supervised technology is used when there is a large amount of labeled data. The AI platform may update the AI model by using the strongly supervised technology. It should be noted that the strongly supervised technology herein is merely a general term, and is merely used as an example. In specific implementation, the strongly supervised technology may be a specific strongly supervised training method, and corresponding training methods are different for different tasks and scenarios.

In a possible implementation, in an AI model update process, when there is no user participation, the labeled data in the target data set is data that is sampled and/or generated in current labeled data and that is suitable for data distribution of the inference data set. When the target data set includes unlabeled data and labeled data that are suitable for data distribution of the inference data set, the AI platform may optimize a feature extraction part in the existing AI model in an unsupervised manner by using the unlabeled data in the target data set, and update the existing AI model based on the optimized feature extraction part and the labeled data in the target data set.

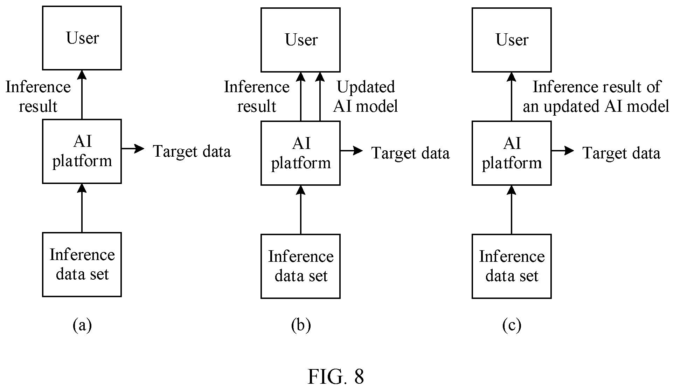

In this embodiment, when the target data set includes unlabeled data and labeled data suitable for data distribution of the inference data set, the AI platform may optimize a feature extraction part in the existing AI model in an unsupervised manner by using the unlabeled data in the target data set, to obtain the optimized feature extraction part. Herein, the unsupervised manner may be a self-supervised manner and the like. Then, the AI platform may further update the existing AI model by using the optimized feature extraction part and the labeled data suitable for data distribution of the inference data set, to obtain the updated AI model. In this way, when there is no user participation, the existing AI model can also be updated. For example, as shown in FIG. 8, when there is no user participation, the AI platform obtains an inference result and target data when performing inference on the inference data set, provides only the inference result for the user, and does not provide the target data for the user (as shown in (a) in FIG. 8). The AI platform updates the existing AI model. After updating the existing AI model, the AI platform may provide the updated AI model for the user (as shown in (b) in FIG. 8). Subsequently, the AI platform may perform inference by using the updated AI model, to obtain an inference result and target data, and provide the inference result for the user (as shown in (c) in FIG. 8). Certainly, in FIG. 8, the target data may not be output.

It should be noted herein that "the existing AI model is updated based on the optimized feature extraction part and the labeled data in the target data set" may be certainly that the existing AI model is updated based on the optimized feature extraction part and the unlabeled data and the labeled data in the target data set.

In a possible implementation, in an AI model update process, when there is no user participation, the labeled data in the target data set is data that is sampled and/or generated in current labeled data and that is suitable for data distribution of the inference data set. When the target data set includes unlabeled data and labeled data that are suitable for data distribution of the inference data set, the AI platform may label the unlabeled data in the target data set by using the existing AI model, to obtain the labeled data in the target data set; label the unlabeled data in the target data set by using the existing AI model, to obtain a labeling result of the unlabeled data; and update the existing AI model based on the labeling result of the unlabeled data and the labeled data in the target data set.

In this embodiment, when the data in the target data set is unlabeled data, the AI platform labels the unlabeled data in the target data set by using the existing AI model, to obtain the labeling result (the labeling result herein may be an inaccurate label, and may be referred to as a "pseudo-label") of the unlabeled data and a corresponding confidence. Then, the AI model updates the existing AI model by using a labeling result with a high confidence (for example, a labeling result whose confidence is higher than a preset threshold) and the labeled data in the target data set, to obtain the updated AI model.

Alternatively, the AI model trains the existing AI model by using a labeling result with a high confidence, to obtain a trained AI model. Then, the AI platform may further update the trained AI model by using the labeled data (the part of labeled data is labeled data that is sampled and/or generated and that is suitable for data distribution of the inference data set) in the target data set, to obtain the updated AI model. In this way, when there is no user participation, the existing AI model can also be updated.

In a possible implementation, in an AI model update process, when there is user participation, the AI platform may update the existing AI model based on the labeled data in the target data set and by using the strongly supervised learning technology. Specifically, when a task is not changed, the strongly supervised learning technology is directly used to update the existing AI model to obtain the updated AI model. When a task is changed (for example, classification is required because a new category appears), if the new category has a small amount of labeled data in the target data set, the AI platform may update the existing AI model by using the few-shot learning technology.

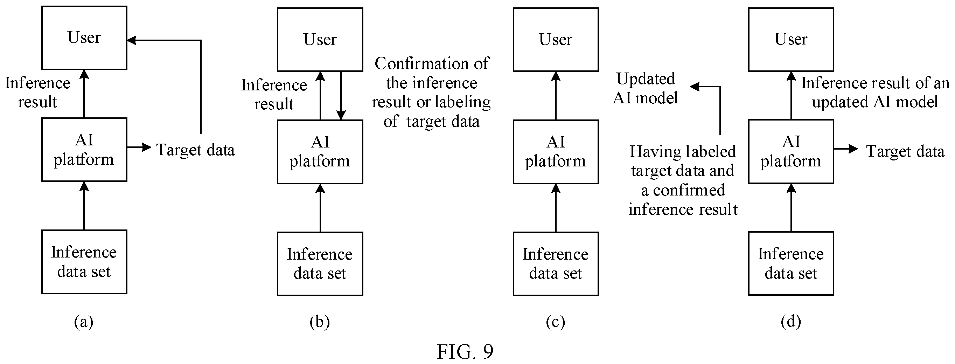

For example, as shown in FIG. 9, when there is user participation, the AI platform obtains an inference result and target data when performing inference on the inference data set, and provides the inference result and the target data for the user (as shown in (a) in FIG. 9). The user may provide label confirmation of the inference result and/or a labeling result (namely, labeled data) of the target data for the AI platform (as shown in (b) in FIG. 9). The AI platform may update the existing AI model based on the labeled data provided by the user, to obtain the updated AI model, and provide the updated AI model for the user (as shown in (c) in FIG. 9). Subsequently, the AI platform may perform inference by using the updated AI model, to obtain an inference result and target data, and provide the inference result and the target data for the user (as shown in (d) in FIG. 9).

In addition, when a task is not changed, if there is a small amount of labeled data in the target data set, the AI platform may further sample and/or generate, in current labeled data, data suitable for data distribution of the inference data set, to expand the labeled data in the target data set.

In addition, when the few-shot learning technology is used to update the existing AI model, the feature extraction part in the existing AI model may further be optimized through representation learning.

In a possible implementation, a process in which the AI platform determines the difference between data distribution of the inference data set and data distribution of the training data set is as follows:

The AI platform obtains a probabilistic model for modeling data distribution. Herein, the AI platform may obtain the probabilistic model through modeling by the AI platform, or may obtain the probabilistic model from another platform. The AI platform may use the probabilistic model to extract a feature of the training data set to fit Gaussian mixture distribution. The AI platform may fit Gaussian distribution on the feature of the training data set to determine a likelihood of the inference data set. The likelihood represents the difference between data distribution of the training data set and data distribution of the inference data set. A larger likelihood indicates a smaller difference, and a smaller likelihood indicates a larger difference.

It should be noted herein that, distribution used during probabilistic modeling may be Gaussian mixture distribution, a parametric distribution fitting method, or the like. Certainly, distribution may be other distribution, a non-parametric distribution fitting algorithm, a complex probabilistic graphical model, or the like.

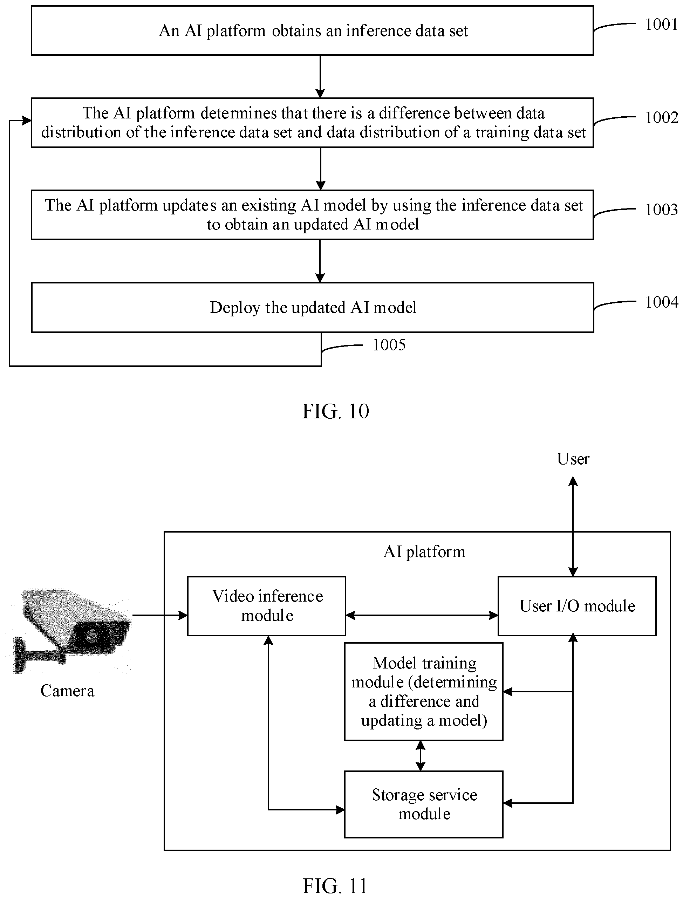

It should be noted that only a process of updating the existing AI model once is described above. In a use process, the existing AI model may be continuously updated cyclically. FIG. 10 is a schematic cyclic diagram of updating an AI model. In step 1001, an AI platform obtains an inference data set. In step 1002, the AI platform determines that there is a difference between data distribution of the inference data set and data distribution of a training data set. In step 1003, the AI platform updates a currently existing AI model by using the inference data set to obtain an updated AI model. In step 1004, the AI platform deploys the updated AI model, where the updated AI model is a currently existing AI model. In step 1005, the AI platform returns to step 1002.

In FIG. 10, only a cyclic process is described, and the process is actually cyclic provided that AI model update is not stopped. Specifically, the AI platform accesses an inference data source, constantly obtains data in the inference data set from the inference data source, determines data distribution of the inference data set, and then determines whether there is a difference between data distribution of the inference data set and data distribution of the training data set. When there is a difference, the AI platform updates the existing AI model, deploys the updated AI model, and then returns to step 1002. Step 1001 and step 1002 are in an asynchronous relationship with step 1003 and step 1004. A reason is as follows: The data in the inference data set is constantly updated, and the AI platform constantly determines whether there is a difference between data distribution of the inference data set and data distribution of the training data set. However, step 1003 and step 1004 are performed only when there is a difference between data distribution of the inference data set and data distribution of the training data set.

The user may input a stop instruction into the AI platform to control the AI platform to update the existing AI model. Alternatively, when the AI platform determines that the difference between data distribution of the inference data set and data distribution of the training data set is small, and a precision change of the updated AI model is smaller than that of the existing AI model (namely, the AI model existing before update), the AI platform may actively stop updating the AI model.

After stopping updating the AI model, if re-determining that a difference between data distribution of the inference data set and data distribution of the training data set is large, the AI platform may provide an update prompt message (for example, send the update prompt message to a terminal of the user by using an SMS message, or display the update prompt message by using the display interface) for the user. When receiving an update acknowledgement instruction input by the user, the AI platform may restart an AI model update procedure. Certainly, when re-determining that a difference between data distribution of the inference data set and data distribution of the training data set is large, the AI platform may actively start an AI model update procedure.

In this embodiment of this application, the method for updating an AI model may be applied to an application scenario in which an action in an image is identified, for example, applied to identification of a non-standard sorting action in a logistics scenario. In this application scenario, the AI platform may perform inference and update an existing AI model based on the existing AI model.

In this application scenario, an inference data set is surveillance video data of a user, and the existing AI model is a model that can identify a non-standard sorting action. In this application scenario, a training data set is also video data. A schematic diagram of the scenario is shown in FIG. 11. The AI platform includes a video inference module (namely, the foregoing inference module 103), a storage service module (namely, the foregoing data storage module 105), a model training module (namely, the foregoing model training module 102), a user I/O module (namely, the foregoing user I/O module 101), and the like. The video inference module is configured to perform inference on the inference data set obtained from a camera. The storage service module is configured to store the inference data set and the like. The model training module is configured to update the existing AI model. The user I/O module is configured to interact with the user.

An AI model update procedure may include a process of determining a difference between data distribution of the inference data set and data distribution of the training data set, a process of updating the existing AI model online, a process of performing inference on the inference data set, processing of providing target data for the user, a process of updating the existing AI model offline, and the like.

1. The process of determining a difference between data distribution of the inference data set and data distribution of the training data set:

For a given input inference data set, the AI platform may extract a video frame in the inference data set, extract a deep feature of the video frame by using a stored deep neural network, and/or extract a non-deep feature by using another algorithm. For example, the non-deep feature is a frame difference or an optical flow. The frame difference is a result obtained by performing subtraction on two adjacent frames of images, and the optical flow is a position change relationship between pixels in two adjacent frames of images, and is a displacement field of pixel movement.

It should be noted herein that, if the inference data set is a video stream or a continuous video in a time period, the AI platform may obtain a short video with proper duration as an input by sliding a window or through video segment segmentation. A manner of extracting the video frame in the inference data set includes but is not limited to extracting all video frames, uniform sampling, non-uniform sampling, and multi-scale sampling. Non-uniform sampling may be selecting a video frame based on a key frame, an inter-frame similarity, and the like, and may be specifically selecting a video frame whose key frame and inter-frame similarity are less than a specified value and the like. Multi-scale sampling may be obtaining a plurality of segments of short videos by using different sampling intervals, separately extracting deep features, and integrating the extracted deep features to obtain the foregoing deep feature. The deep neural network includes but is not limited to a two-dimensional/three-dimensional convolutional neural network, a recurrent neural network, a long short-term memory network, a two-stream convolutional neural network, and a combination and variants thereof.

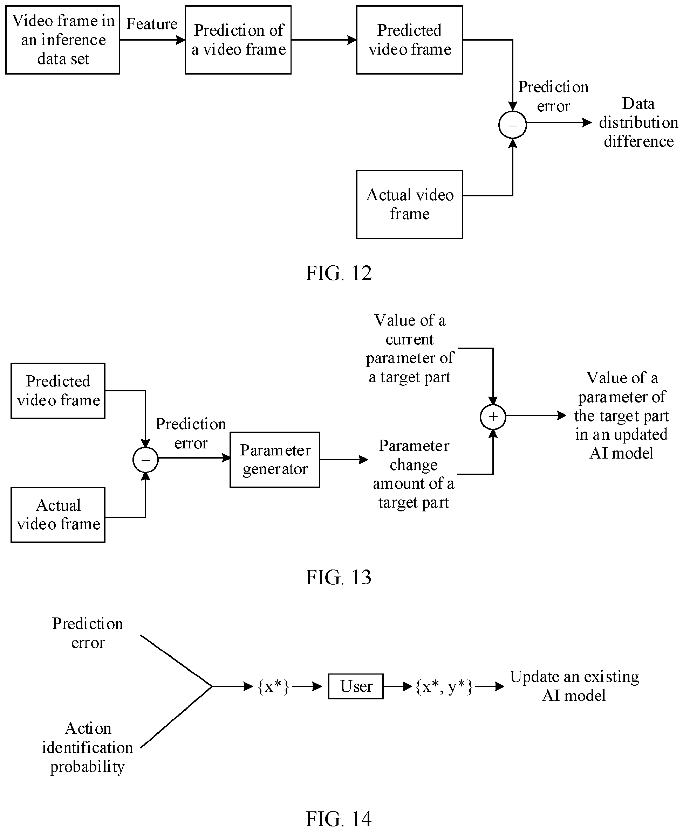

The AI platform stores a video prediction model. The video prediction model may be established by the AI platform, or may be obtained from another platform. As shown in FIG. 12, the AI platform may predict a future video frame by using the foregoing extracted feature (the feature includes a deep feature and/or a non-deep feature). Then, the AI platform calculates a prediction error between the predicted video frame and an actual video frame in the inference data set, and uses a prediction error of one time of prediction or an average value of prediction errors of a plurality of times of prediction to represent the difference between data distribution of the training data set and data distribution of the inference data set. Specifically, when predicting the future video frame, the AI platform may predict one or more frames. The foregoing video prediction model includes but is not limited to a two-dimensional/three-dimensional convolutional neural network, a recurrent neural network, a generative adversarial network, a variational auto-encoder, and a combination and variants thereof.

During data distribution modeling, another manner may be used, for example, video frame interpolation, video reconstruction, and calculating an inter-frame similarity may be used. Video frame interpolation is predicting, by using non-adjacent video frames, a video frame by which the non-adjacent video frames are separated. Video reconstruction is reconstructing a reconstructed video frame of a current video frame based on a feature of the current video frame, comparing the reconstructed video frame with the current video frame to obtain a reconstruction error, and using a reconstruction error of one video frame or an average value of reconstruction errors of a plurality of video frames to represent the difference between data distribution of the training data set and data distribution of the inference data set. Calculating an inter-frame similarity means calculating a similarity between two adjacent video frames, and using one similarity between video frames or an average value of similarities between a plurality of two adjacent video frames to represent the difference between data distribution of the training data set and data distribution of the inference data set.

In addition, during data distribution modeling, in a space dimension, an overall image of each video frame may be used for modeling, a local region of each video frame may be used for modeling, or the two manners are combined. Similarly, a modeling manner similar to an overall manner (an entire segment of video is considered), a local manner (a part of video in the entire segment of video is considered), or a combination thereof may also be used in a time dimension.

When calculating the prediction error, the AI platform may use any metric that meets a task requirement, including but not limited to an L1 distance (a difference between two predicted video frames), an L2 distance (a square of a difference between two predicted video frames), a Wasserstein distance (which may also be referred to as an earth mover's distance (earth mover distance)), a learnable metric, and a combination and variants thereof.

In the foregoing descriptions, the difference between data distribution of the inference data set and data distribution of the training data set is directly represented by using the prediction error. Certainly, a result obtained by performing linear or non-linear transformation on the prediction error may be used for representation.

The foregoing procedure of determining a change of data distribution is described in FIG. 12.

2. The process of updating the existing AI model online:

In this embodiment, when the difference between data distribution of the inference data set and data distribution of the training data set is less than a difference value, the AI platform may update the existing AI model online. Specifically, as shown in FIG. 13, the AI platform may input the difference between data distribution of the inference data set and data distribution of the training data set into a parameter generator (the parameter generator models a correspondence between a parameter change amount and a data distribution difference), and an output of the parameter generator is the parameter change amount of the target part mentioned above. The AI platform adds a value of the current parameter of the target part in the existing AI model and the parameter change amount to obtain a value of the parameter of the target part in the updated AI model.

Herein, the parameter change amount of the target part is determined by using the difference between data distribution of the inference data set and data distribution of the training data set. Certainly, the parameter change amount of the target part may be determined by using some or all data in the inference data set and the difference. This is not limited in this embodiment of this application.

3. The process of performing inference on the inference data set:

In this embodiment, the existing AI model (or the updated AI model) performs inference on the video frame in the inference data set to output an inference result in which an action is identified, and the AI platform displays the inference result by using the display interface.

4. Processing of providing target data for the user:

The AI platform may obtain, from the inference data set based on the difference between data distribution of the inference data set and data distribution of the training data set, the target data that meets the sample condition.

In this embodiment, the AI platform may obtain, from the inference data through screening by using the difference between data distribution of the inference data set and data distribution of the training data set, the target data that meets the sample condition. The target data that meets the sample condition is suitable for updating the existing AI model.

Optionally, the AI platform may determine the target data by using uncertainty, and processing is as follows:

The AI platform may use the existing AI model to output uncertainty of each piece of inference data in the inference data, and the uncertainty may be represented by using any one of an action class probability, information entropy, mutual information, and variance.

Then, the AI platform obtains, from the inference data set by using the difference between data distribution of the inference data set and data distribution of the training data set and the uncertainty corresponding to each piece of inference data, the target data that meets the sample condition.

Specifically, when the uncertainty is represented by using the action class probability, the difference between data distribution of the inference data set and data distribution of the training data set is represented by using the prediction error, the L1 distance is used to measure the prediction error, and entropy of the action class probability is used to measure the uncertainty, the target data that meets the sample condition is as follows:

$$ x^* = arg\,max_x \left\{ \lambda_1 \left\| I(x) - \hat{I}(x) \right\|_1 - \lambda_2 \sum_i p_i(x)\,log\,p_i(x) \right\} \tag{1} $$

In formula (1), x represents the target data (which may also be referred to as a sample). In the first item, $I(x)$ represents the actual video frame, and $\hat{I}(x)$ represents the predicted video frame; in the second item, $p_i(x)$ represents a probability of an action of an $i^{th}$ class corresponding to x, and $\lambda_1$, and $\lambda_2$ are used as hyperparameters and are separately weights of the two items to weigh the two items; and $x^*$ represents selected to-be-labeled target data. A meaning of formula (1) is that x existing when $\lambda_1 \| I(x) - \hat{I}(x) \|_1 - \lambda_2 \sum_i p_i(x)\log p_i(x)$ has a maximum value is $x^*$. In this way, typical data in the inference data set can be obtained, and is more suitable for updating the existing AI model, so that the updated AI model has better inference precision.

As shown in FIG. 14, the AI platform provides the target data for the user, and the user labels $x^*$ to obtain a labeling result $y^*$. The AI platform updates the existing AI model based on $\{x^*, y^*\}$.

5. The process of updating the existing AI model offline:

The AI platform may update the existing AI model by using a supervised technology. The AI platform may optimize the existing AI model based on the target data set, or may directly retrain an AI model based on the target data set as the updated AI model. When the existing AI model is updated, an optimization algorithm used for updating the parameter includes but is not limited to a random gradient descent algorithm and a conjugate gradient descent algorithm.

A process of evaluating the updated AI model and a process of deploying the updated AI model are the same as those described above, and details are not described herein again.

In this way, in the technical solution in this embodiment of this application, a change of data distribution can be perceived. A local parameter is adjusted by using an adaptive capability of the AI model. In addition, new labeled data is obtained by interacting with the user to perform overall update on the AI model offline, to continuously adapt to new data distribution and ensure inference precision of the AI model. In addition, the AI platform may control the AI model to be updated continuously and automatically, and the user does not need to have algorithm-related expertise.

In addition, in this embodiment of this application, the AI model may be updated when there is user participation and when there is no user participation. Furthermore, when the AI model is updated, an amount of labeled data imposes no limitation, whether a task is changed imposes no limitation, and the AI platform may be suitable for any form of inference data set such as batch data (100 consecutive pictures) and stream data (video data that is gradually generated).

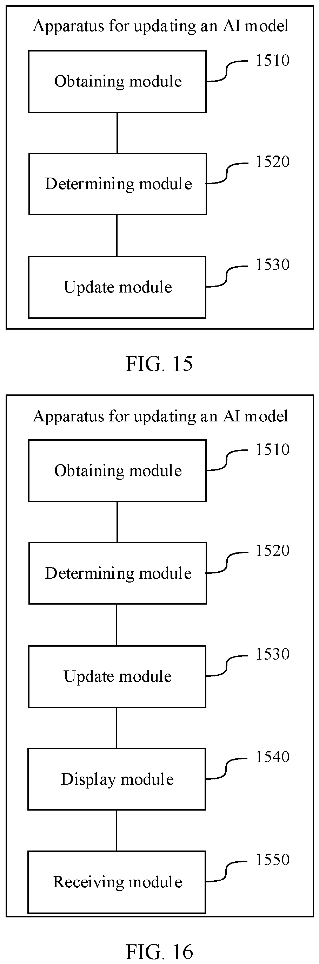

FIG. 15 is a diagram of a structure of an apparatus for updating an AI model according to an embodiment of this application. The apparatus may be implemented as a part or all of the apparatus by using software, hardware, or a combination thereof. In some embodiments, the apparatus for updating an AI model may be a part or all of the foregoing AI platform 100.

The apparatus provided in this embodiment of this application may implement the procedure in FIG. 7 in the embodiments of this application. The apparatus includes an obtaining module 1510, a determining module 1520, and an update module 1530.

The obtaining module 1510 is configured to obtain an inference data set, where inference data in the inference data set is used to be input into an existing AI model for performing inference, and the obtaining module may be specifically configured to implement an obtaining function in step 701 and perform an implicit step included in step 701.

The determining module 1520 is configured to determine that there is a difference between data distribution of the inference data set and data distribution of a training data set, where the training data set is a data set used for training the existing AI model, and the determining module may be specifically configured to implement a determining function in step 702 and perform an implicit step included in step 702.

The update module 1530 is configured to update the existing AI model by using the inference data set to obtain an updated AI model, and may be specifically configured to implement an update function of step 703 and perform an implicit step included in step 703.

In a possible implementation, the existing AI model is deployed on an inference platform, and the determining module 1520 is further configured to: after the updated AI model is obtained, compare inference precision of the updated AI model with inference precision of the existing AI model, and determine that the inference precision of the updated AI model is better than the inference precision of the existing AI model.

The update module 1530 is further configured to deploy the updated AI model on the inference platform, so that the updated AI model performs inference in place of the existing AI model.

In a possible implementation, as shown in FIG. 16, the apparatus further includes: a display module 1540, configured to: before the updated AI model is deployed on the inference platform to perform inference in place of the existing AI model, display the inference precision of the existing AI model and the inference precision of the updated AI model by using a display interface; and

a receiving module 1550, configured to receive an update instruction of a user for the existing AI model.

In a possible implementation, the update module 1530 is configured to:

if the difference meets an offline update condition, update the existing AI model offline by using the inference data set; or

if the difference does not meet an offline update condition, update the existing AI model online by using the inference data set.

In a possible implementation, the update module 1530 is configured to:

determine a parameter change amount of a target part in the existing AI model by using the difference between data distribution of the inference data set and data distribution of the training data set; and

determine a parameter of a target part in the updated AI model based on a current parameter and the parameter change amount of the target part in the existing AI model.

In a possible implementation, the update module 1530 is configured to:

construct a target data set based on the inference data set; and

update the existing AI model by using the target data set.

In a possible implementation, the update module 1530 is configured to:

obtain, from the inference data set, target data that meets a sample condition, and display the target data by using the display interface;

obtain a result of labeling the target data by the user; and

construct the target data set based on the target data and the labeling result of the target data.

In a possible implementation, the update module 1530 is configured to:

obtain, from the inference data set based on the difference between data distribution of the inference data set and data distribution of the training data set, the target data that meets the sample condition, where the target data is suitable for updating the existing AI model.

In a possible implementation, the target data set further includes labeled data that is sampled and/or generated in current labeled data and that is suitable for data distribution of the inference data set, and the current labeled data includes data in the training data set.

In a possible implementation, the target data set includes unlabeled data and labeled data that are suitable for data distribution of the inference data set.

The update module 1530 is configured to:

optimize a feature extraction part in the existing AI model in an unsupervised manner by using the unlabeled data in the target data set; and
update the existing AI model based on the optimized feature extraction part and the labeled data in the target data set.

In a possible implementation, the target data set includes unlabeled data and labeled data that are suitable for data distribution of the inference data set.

The update module 1530 is configured to:

label the unlabeled data in the target data set by using the existing AI model, to obtain a labeling result of the unlabeled data; and
update the existing AI model based on the labeling result of the unlabeled data and the labeled data in the target data set.

In a possible implementation, the update module 1530 is configured to:

obtain, based on a data characteristic of data in the target data set, a policy for updating the existing AI model; and
update the existing AI model based on the policy.

In a possible implementation, the obtaining module 1510 is further configured to obtain an AI model update period input by the user.

The determining module 1520 is configured to:
determine, based on the AI model update period, that there is a difference between data distribution of the inference data set and data distribution of the training data set.

Division into the modules in this embodiment of this application is an example, and is merely logical function division. During actual implementation, another division manner may be used. In addition, the functional modules in the embodiments of this application may be integrated in one processor, or may exist as physically independent. Alternatively, two or more modules may be integrated into one module. The integrated module may be implemented in a form of hardware, or may be implemented in a form of a software function module.

This application further provides the computing device 400 shown in FIG. 4. The processor 402 in the computing device 400 reads a program and an image set that are stored in the memory 401 to perform the method performed by the foregoing AI platform.

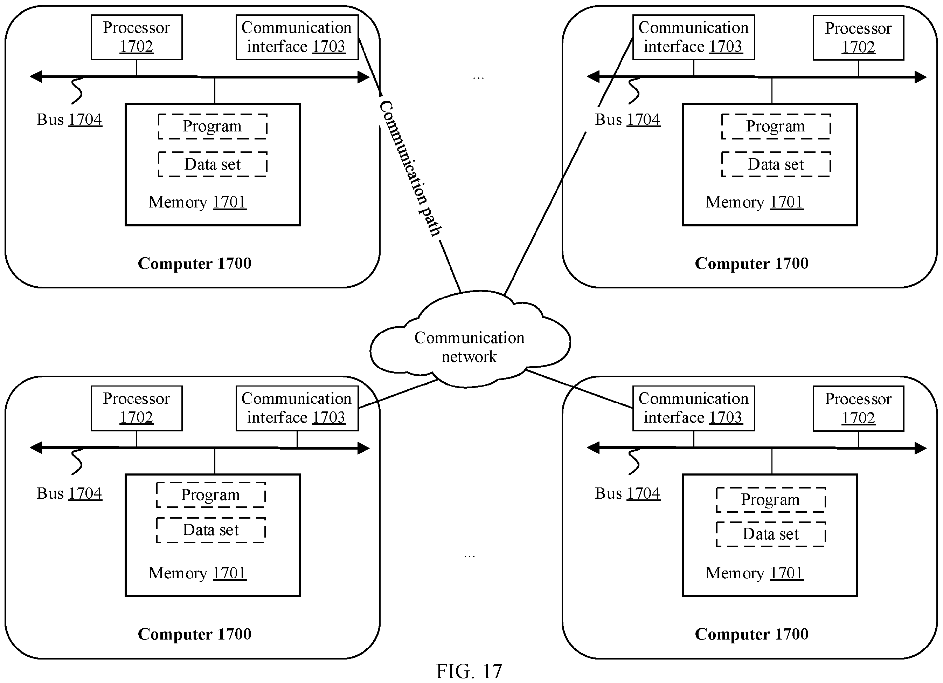

The modules in the AI platform 100 provided in this application may be deployed on a plurality of computers in a same environment or different environments in a distributed manner. Therefore, this application further provides a computing device shown in FIG. 17. The computing device includes a plurality of computers 1700, and each computer 1700 includes a memory 1701, a processor 1702, a communication interface 1703, and a bus 1704. The memory 1701, the processor 1702, and the communication interface 1703 are communicatively connected to each other by using the bus 1704.

The memory 1701 may be a read-only memory, a static storage device, a dynamic storage device, or a random access memory. The memory 1701 may store a program. When the program stored in the memory 1701 is executed by the processor 502, the processor 1702 and the communication interface 1703 are configured to perform some methods for updating an AI model performed by the AI platform. The memory may further store an image set. For example, a part of storage resources in the memory 1701 are grouped into an inference data set storage module, configured to store an inference data set, and a part of storage resources in the memory 1701 are grouped into an AI model storage module, configured to store an AI model library.

The processor 1702 may use a general-purpose central processing unit, a microprocessor, an application-specific integrated circuit, a graphics processing unit, or one or more integrated circuits.

The communication interface 1703 uses a transceiver module such as a transceiver, to implement communication between the computer 1700 and another device or a communication network. For example, the inference data set may be obtained by using the communication interface 1703.

The bus 504 may include a path for transferring information between components (for example, the memory 1701, the processor 1702, and the communication interface 1703) of the computer 1700.

A communication path is established between the foregoing computers 1700 by using a communication network. Any one or more of a user I/O module 101, a model training module 102, an inference module 103, an AI model storage module 104, or a data storage module 105 are run on each computer 1700. Any computer 1700 may be a computer (such as a server) in a cloud data center, a computer in an edge data center, or a terminal computing device.

The descriptions of procedures corresponding to the foregoing accompanying drawings have respective focuses. For a part not described in detail in a procedure, refer to related descriptions of another procedure.

All or some of the foregoing embodiments may be implemented using software, hardware, or a combination thereof. When software is used to implement the embodiments, all or some of the embodiments may be implemented in a form of a computer program product. A computer program product that provides an AI platform includes one or more computer instructions for starting the AI platform. When the computer program instructions are loaded and executed on a computer, all or a part of the procedures or functions described in FIG. 5, FIG. 11, FIG. 14, or FIG. 15 in the embodiments of this application are generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium stores computer program instructions that provide an AI platform. The computer-readable storage medium may be any medium accessible by a computer, or a data storage device, such as a server or a data center, integrating one or more usable media. The medium may be a magnetic medium (for example, a floppy disk, a hard disk, or a magnetic tape), an optical medium (for example, an optical disk), or a semiconductor medium (for example, an SSD).

**Claims**

1. A method for updating an artificial intelligence AI model, wherein the method comprises:

   obtaining an inference data set, wherein inference data in the inference data set is used to be input into an existing AI model for performing inference;
   determining that there is a difference between data distribution of the inference data set and data distribution of a training data set, wherein the training data set is a data set used for training the existing AI model; and
   updating the existing AI model by using the inference data set to obtain an updated AI model.

2. The method according to claim 1, wherein the existing AI model is deployed on an inference platform, and the method further comprises:

   comparing inference precision of the updated AI model with inference precision of the existing AI model, and determining that the inference precision of the updated AI model is better than the inference precision of the existing AI model; and
   deploying the updated AI model on the inference platform to perform inference in place of the existing AI model.

3. The method according to claim 2, wherein before the deploying the updated AI model on the inference platform, the method further comprises:

   displaying the inference precision of the existing AI model and the inference precision of the updated AI model by using a display interface; and
   receiving an update instruction of a user for the existing AI model.

4. The method according to any one of claims 1 to 3, wherein the updating the existing AI model by using the inference data set comprises:

   if the difference meets an offline update condition, updating the existing AI model offline by using the inference data set; or
   if the difference does not meet an offline update condition, updating the existing AI model online by using the inference data set.

5. The method according to claim 4, wherein the updating the existing AI model online by using the inference data set comprises:

determining a parameter change amount of a target part in the existing AI model by using the difference between data distribution of the inference data set and data distribution of the training data set; and

determining a parameter of a target part in the updated AI model based on a current parameter and the parameter change amount of the target part in the existing AI model.

6. The method according to any one of claims 1 to 4, wherein the updating the existing AI model by using the inference data set comprises:

constructing a target data set based on the inference data set; and

updating the existing AI model by using the target data set.

7. The method according to claim 6, wherein the constructing a target data set based on the inference data set comprises:

obtaining, from the inference data set, target data that meets a sample condition, and displaying the target data by using the display interface;

obtaining a result of labeling the target data by the user; and

constructing the target data set based on the target data and the labeling result of the target data.

8. The method according to claim 6, wherein the target data set comprises unlabeled data and labeled data that are suitable for data distribution of the inference data set; and

the updating the existing AI model by using the target data set comprises:

optimizing a feature extraction part in the existing AI model in an unsupervised manner by using the unlabeled data in the target data set; and

updating the existing AI model based on the optimized feature extraction part and the labeled data in the target data set.

9. The method according to claim 6, wherein the target data set comprises unlabeled data and labeled data that are suitable for data distribution of the inference data set; and

the updating the existing AI model by using the target data set comprises:

labeling the unlabeled data in the target data set by using the existing AI model, to obtain a labeling result of the unlabeled data; and

updating the existing AI model based on the labeling result of the unlabeled data and the labeled data in the target data set.

10. The method according to claim 6 or 7, wherein the updating the existing AI model by using the target data set comprises:

obtaining, based on a data characteristic of data in the target data set, a policy for updating the existing AI model; and

updating the existing AI model based on the policy.

11. The method according to any one of claims 1 to 10, wherein the method further comprises:

obtaining an AI model update period input by the user; and

the determining that there is a difference between data distribution of the inference data set and data distribution of a training data set comprises:

determining, based on the AI model update period, that there is a difference between data distribution of the inference data set and data distribution of the training data set.

12. An apparatus for updating an artificial intelligence AI model, wherein the apparatus comprises:

an obtaining module, configured to obtain an inference data set, wherein inference data in the inference data set is used to be input into an existing AI model for performing inference;

a determining module, configured to determine that there is a difference between data distribution of the inference data set and data distribution of a training data set, wherein the training data set is a data set used for training the existing AI model; and

an update module, configured to update the existing AI model by using the inference data set to obtain an updated AI model.

13. The apparatus according to claim 12, wherein the existing AI model is deployed on an inference platform, and the determining module is further configured to: compare inference precision of the updated AI model with inference precision of the existing AI model, and determine that the inference precision of the updated AI model is better than the inference precision of the existing AI model; and

the update module is further configured to deploy the updated AI model on the inference platform, so that the updated AI model performs inference in place of the existing AI model.

14. The apparatus according to claim 13, wherein the apparatus further comprises: a display module, configured to: before the updated AI model is deployed on the inference platform, display the inference precision of the existing AI model and the inference precision of the updated AI model by using a display interface; and

a receiving module, configured to receive an update instruction of a user for the existing AI model.

15. The apparatus according to any one of claims 12 to 14, wherein the update module is configured to:

if the difference meets an offline update condition, update the existing AI model offline by using the inference data set; or

if the difference does not meet an offline update condition, update the existing AI model online by using the inference data set.

16. The apparatus according to claim 15, wherein the update module is configured to:

determine a parameter change amount of a target part in the existing AI model by using the difference between data distribution of the inference data set and data distribution of the training data set; and

determine a parameter of a target part in the updated AI model based on a current parameter and the parameter change amount of the target part in the existing AI model.

17. The apparatus according to any one of claims 12 to 16, wherein the update module is configured to:

construct a target data set based on the inference data set; and

update the existing AI model by using the target data set.

18. The apparatus according to claim 17, wherein the update module is configured to:

obtain, from the inference data set, target data that meets a sample condition, and display the target data by using the display interface;

obtain a result of labeling the target data by the user; and

construct the target data set based on the target data and the labeling result of the target data.

19. The apparatus according to claim 17, wherein the target data set comprises unlabeled data and labeled data that are suitable for data distribution of the inference data set; and

the update module is configured to:

optimize a feature extraction part in the existing AI model in an unsupervised manner by using the unlabeled data in the target data set; and

update the existing AI model based on the optimized feature extraction part and the labeled data in the target data set.

20. The apparatus according to claim 17, wherein the target data set comprises unlabeled data and labeled data that are suitable for data distribution of the inference data set; and

the update module is configured to:

label the unlabeled data in the target data set by using the existing AI model, to obtain a labeling result of the unlabeled data; and
update the existing AI model based on the labeling result of the unlabeled data and the labeled data in the target data set.

21. The apparatus according to claim 17 or 18, wherein the update module is configured to:

obtain, based on a data characteristic of data in the target data set, a policy for updating the existing AI model; and
update the existing AI model based on the policy.

22. The apparatus according to any one of claims 12 to 21, wherein the obtaining module is further configured to obtain an AI model update period input by the user; and
the determining module is configured to determine, based on the AI model update period, that there is a difference between data distribution of the inference data set and data distribution of the training data set.

23. A computing device for updating an artificial intelligence AI model, wherein the computing device comprises a processor and a memory;

the memory stores computer instructions; and
the processor executes the computer instructions, so that the computing device performs the method according to any one of claims 1 to 11.

24. A computer-readable storage medium, wherein the computer-readable storage medium stores computer instructions, and when the computer instructions in the computer-readable storage medium are executed by a computing device, so that the computing device performs the method according to any one of claims 1 to 11, or the computing device implements a function of the apparatus according to any one of claims 12 to 22.

FIG. 1

Cloud data center

AI platform 100

Cloud environment

Cloud service platform

AI development cloud service

Purchase a cloud service

Provide the AI development cloud service

User

FIG. 2

FIG. 3

**Computing device 400**

Processor 402

Communication interface 403

Bus 404

Program

Data set

Memory 401

FIG. 4

(a) Online update

(b) Online update

(c) Offline update

FIG. 5

FIG. 6

FIG. 7

User

Inference
result

AI
platform → Target data

Inference
data set

(a)

User

Inference    Updated
result     AI model

AI
platform → Target data

Inference
data set

(b)

User

Inference result of
an updated AI model

AI
platform → Target data

Inference
data set

(c)

FIG. 8

FIG. 9

(a) Inference data set → AI platform → User; AI platform → Target data; User → Inference result

(b) Inference data set → AI platform → User; User ↔ AI platform; Inference result; Confirmation of the inference result or labeling of target data

(c) Inference data set → AI platform → User; Updated AI model; Having labeled target data and a confirmed inference result

(d) Inference data set → AI platform → User; AI platform → Target data; Inference result of an updated AI model

| An AI platform obtains an inference data set | 1001 |

| The AI platform determines that there is a difference between data distribution of the inference data set and data distribution of a training data set | 1002 |

| The AI platform updates an existing AI model by using the inference data set to obtain an updated AI model | 1003 |

| Deploy the updated AI model | 1004 |

1005

FIG. 10

User

AI platform

Camera

Video inference module

User I/O module

Model training module (determining a difference and updating a model)

Storage service module

FIG. 11

FIG. 12

FIG. 13

FIG. 14

Apparatus for updating an AI model

Obtaining module — 1510

Determining module — 1520

Update module — 1530

FIG. 15

Apparatus for updating an AI model

Obtaining module — 1510

Determining module — 1520

Update module — 1530

Display module — 1540

Receiving module — 1550

FIG. 16

Processor
1702

Communication
interface 1703

Bus 1704

Program

Data set

Memory 1701

**Computer 1700**

Communication
interface 1703

Processor
1702

Bus 1704

Program

Data set

Memory 1701

**Computer 1700**

...

Communication path

Communication
network

Processor
1702

Communication
interface 1703

Bus 1704

Program

Data set

Memory 1701

**Computer 1700**

Communication
interface 1703

Processor
1702

Bus 1704

Program

Data set

Memory 1701

**Computer 1700**

...

FIG. 17

## INTERNATIONAL SEARCH REPORT

| International application No. |
| --- |
| **PCT/CN2021/104537** |

| | |
| --- | --- |
| **A.** | **CLASSIFICATION OF SUBJECT MATTER** |
| | G06N 3/04(2006.01)i; G06N 3/08(2006.01)i; G06N 20/00(2019.01)i; G06F 8/65(2018.01)i |

According to International Patent Classification (IPC) or to both national classification and IPC

| | |
| --- | --- |
| **B.** | **FIELDS SEARCHED** |

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 华为, 邬书哲, 金鑫, 李心成, 涂丹丹, 人工智能, 模型, 训练, 样本, 实际, 采集, 待测, 推理, 数据, 分布, 差异, 偏移, 不一致, 不均衡, 更新, 自动, 参数, 平台, Artificial Intelligence, AI, model, train, sample, collect, inference, distribute, different, excursion, variance, update, auto, parameter, platform

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 104699685 A (FUJITSU LIMITED) 10 June 2015 (2015-06-10)<br>description, paragraphs [0002]-[0156] | 1-24 |
| X | CN 110414631 A (TENCENT TECHNOLOGY SHENZHEN CO., LTD. et al.) 05 November 2019 (2019-11-05)<br>description paragraphs [0003]-[0321] | 1-24 |
| A | CN 110728294 A (BEIJING YINGPU TECHNOLOGY CO., LTD.) 24 January 2020 (2020-01-24)<br>entire document | 1-24 |
| A | CN 109716346 A (NANTOMICS INC. et al.) 03 May 2019 (2019-05-03)<br>entire document | 1-24 |
| A | CN 109102126 A (YANSHAN UNIVERSITY) 28 December 2018 (2018-12-28)<br>entire document | 1-24 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2021** | **23 September 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

PCT/CN2021/104537

| Patent document cited in search report | | | Publication date (day/month/year) | Patent family member(s) | | | Publication date (day/month/year) |
|---|---|---|---|---|---|---|---|
| CN | 104699685 | A | 10 June 2015 | CN | 104699685 | B | 09 February 2018 |
| CN | 110414631 | A | 05 November 2019 | None | | | |
| CN | 110728294 | A | 24 January 2020 | None | | | |
| CN | 109716346 | A | 03 May 2019 | AU | 2017300259 | A1 | 14 February 2019 |
| | | | | EP | 3485436 | A1 | 22 May 2019 |
| | | | | US | 2018018590 | A1 | 18 January 2018 |
| | | | | EP | 3485436 | A4 | 01 April 2020 |
| | | | | TW | 201812646 | A | 01 April 2018 |
| | | | | MX | 2019000713 | A | 28 November 2019 |
| | | | | CA | 3031067 | A1 | 25 January 2018 |
| | | | | WO | 2018017467 | A1 | 25 January 2018 |
| | | | | JP | 2019526851 | A | 19 September 2019 |
| | | | | KR | 20190032433 | A | 27 March 2019 |
| | | | | SG | 11201900220 | A1 | 27 February 2019 |
| CN | 109102126 | A | 28 December 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202010732241